(19) **Europäisches Patentamt / European Patent Office / Office européen des brevets**

(11) **EP 2 781 636 B1**

(12) **EUROPEAN PATENT SPECIFICATION**

(45) Date of publication and mention
of the grant of the patent:
**08.06.2016 Bulletin 2016/23**

(21) Application number: **12849313.7**

(22) Date of filing: **07.11.2012**

(51) Int Cl.:
*D04H 1/435* (2012.01)   *B29C 43/02* (2006.01)
*D04H 1/425* (2012.01)   *D04H 1/46* (2012.01)

(86) International application number:
**PCT/JP2012/078801**

(87) International publication number:
**WO 2013/073425 (23.05.2013 Gazette 2013/21)**

(54) **NONWOVEN FABRIC FOR PRESS MOLDING, METHOD FOR PRODUCING SAME, AND METHOD FOR PRODUCING MOLDED ARTICLE**

VLIESSTOFF ZUR PRESSFORMUNG, HERSTELLUNGSVERFAHREN DAFÜR UND VERFAHREN ZUR HERSTELLUNG EINES GEFORMTEN ARTIKELS

TEXTILE NON TISSÉ POUR MOULAGE PAR COMPRESSION, MÉTHODE DE PRODUCTION DE CELUI-CI ET MÉTHODE DE PRODUCTION D'UN OBJET MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.11.2011   JP 2011248234**
**18.07.2012   JP 2012159477**

(43) Date of publication of application:
**24.09.2014   Bulletin 2014/39**

(73) Proprietor: **Toray Industries, Inc.**
**Tokyo 103-8666 (JP)**

(72) Inventors:
• **TAKEDA, Hiroki**
**Otsu-shi**
**Shiga 520-2141 (JP)**

• **FUJIYAMA, Tomomichi**
**Chuo-ku**
**Tokyo 103-8666 (JP)**
• **KAJIYAMA, Hiroshi**
**Otsu-shi**
**Shiga 520-2141 (JP)**

(74) Representative: **Kador & Partner**
**Corneliusstraße 15**
**80469 München (DE)**

(56) References cited:
**EP-A1- 1 726 418      WO-A1-2010/137514**
**JP-A- H0 995 852      JP-A- H05 342 903**
**JP-A- 2005 290 288   JP-A- 2007 098 583**
**JP-A- 2007 169 852   JP-A- 2007 270 417**
**JP-A- 2010 126 816   JP-A- 2010 126 816**
**JP-A- 2011 162 904**

**Description**

Technical Field

The present invention relates to a nonwoven fabric for press molding, and a method for producing a molded product using the same.

Background Art

In recent years, environmental problems have attracted attention from all fields, and for curbing deforestation, for example, a fiberboard obtained by thermocompressing short fibers of lignocellulose derived from oil palm, coconut, or kenaf with a thermosetting resin has been proposed (Patent Literature 1).

In addition, for reducing environmental loads, a fiberboard with an apparent density within a certain range obtained by thermocompressing a mixture of a plant-derived polylactic resin and natural fibers has been proposed (Patent Literature 2).

Further, as an improved invention of the above invention of Patent Literature 2, a woody molded product obtained from the polylactic acid fibers and the natural fibers to which an inorganic filler is added for shortening the molding time has been disclosed (Patent Literature 3).

Regarding a molded product comprising polylactic acid fibers and natural fibers, improvement of a nonwoven fabric, as an intermediate of a molded product, comprising polylactic acid fibers and natural fibers has also been required to shorten the time of molding from the nonwoven fabric.

Generally, a molded product is produced by a 3D press molding method in which a nonwoven fabric is heat treated and pressed with use of a mold. However, there was a problem of wrinkles generated on the molded product at a corner thereof, i.e. on a raised portion drawn by the mold.

Further, there was a problem of thinning of the molded product on a deeply raised portion drawn by the mold, resulting in see-through defects or cracks.

Citation List

Patent Literature

[PTL 1] JP-2003-260704 A (claims 1, 2, and 3) (US Pat. No. 6197414)
[PTL 2] JP-2004-130796 A (claim 1, paragraphs 0006, 0023, and 0024) (US-2004-096623 A)
[PTL 3] JP-2005-262559 A (claim 1, paragraph 0007) (EP-1726418 A)

< page 2a>

Summary of Invention

Technical Problem

The present invention is intended to solve the following

JP 2010-126816 A discloses a polylactic acid fiber excellent in heat resistance and in cutting property which includes 0.1 to 5.0 mass% of a metal salt of a phosphonic acid having an aromatic ring in a fiber of polylactic acid resin. The fiber-based board having a crystallinity of not less than 10% in the surface layer portion and a crystallinity of not less than 40% in the middle layer portion comprises the polylactic acid fibers and natural fibers.

EP 1 726 418 A1 discloses a method for manufacturing a molded woody article. The method includes compression molding a base material containing wood fibers, polylactic acid fibers and an inorganic filler at a temperature not less than a melting point of said polylactic acid fibers, and maintaining said molded base material at a temperature close to a crystallization temperature of said polylactic acid fibers for a desired period of time, thereby crystallizing the polylactic acid fibers, thereby producing the molded article. According to this method, a molded woody article can be produced in a shorter time while the crystallinity of polylactic acid as a binder resin is maintained at a higher level. As a result, a molded woody article having good heat resistance can be produced at high efficiency. problems relating to press moldability of a nonwoven fabric comprising polylactic acid fibers and natural fibers in 3D molding.

The first problem is the speed of molding. The talc-containing polylactic acid fibers used in Patent Literature 3 have a crystallization temperature on cooling of 99°C. For sufficient strength retention, a molded product to be used as

2

an automotive interior material, an architectural material, or the like needs to be cooled to 99°C or below, causing a problem of prolonged cooling time.

The second problem is wrinkles generated on a molded product at a corner on a raised portion drawn by the mold. The wrinkles at a corner of a raised portion result from the poor mold followability of a nonwoven fabric in the molding of a fiberboard, and therefore the elongation percentage of the nonwoven fabric in the molding at 200°C has been a problem.

The third problem is see-through defects or cracks generated on the molded product on a deeply raised portion drawn by the mold. Due to the poor tensile strength of a nonwoven fabric, thinning of the molded product occurs when tension is applied by the mold, resulting in see-through defects or cracks on a raised portion. Therefore, the optimization of the tensile performance of a nonwoven fabric has been a problem.

Solution to Problem

To solve the above problems, the present invention is configured as follows.

(1) A nonwoven fabric for press molding comprising polylactic acid fibers and natural fibers, the nonwoven fabric being characterized by that the polylactic acid fibers have a crystallization temperature on cooling of 120°C or higher, that the nonwoven fabric has a tensile strength of 20 N/cm$^2$ or higher, and that the nonwoven fabric has a tensile stress of 80 N/cm$^2$ or lower at 30% tensile elongation in a 200°C atmosphere.

(2) The nonwoven fabric for press molding according to the above (1), wherein the nonwoven fabric has a weight per unit area of 450 to 3,000 g/m$^2$.

(3) The nonwoven fabric for press molding according to the above (1) or (2), wherein 30% or more of the natural fibers have a fiber length of 45 mm or longer.

(4) The nonwoven fabric for press molding according to any of the above (1) to (3), wherein the polylactic acid fibers comprise carbon black.

(5) The nonwoven fabric for press molding according to any of the above (1) to (4), wherein the dry-heat shrinkage of the polylactic acid fibers is 5% or less.

(6) The nonwoven fabric for press molding according to any of the above (1) to (5), wherein the tensile strength of the natural fibers is 1.0 cN/dtex or more.

(7) The nonwoven fabric for press molding according to any of the above (1) to (6), wherein the natural fibers are kenaf fibers.

(8) A method for producing a molded product, the method comprising press-molding the nonwoven fabric for press molding according to any of the above (1) to (7).

(9) The method for producing a molded product according to the above (8), wherein the press molding is performed using a mold having a cooling means for a molding time of 8 seconds or less.

(10) The method for producing a molded product according to the above (8) or (9), wherein the natural fibers to be mixed are kenaf fibers.

Advantageous Effects of Invention

According to the present invention, a high-strength 3D molded product can be molded in a short period of time with use of a nonwoven fabric comprising polylactic acid fibers and natural fibers, and the obtained molded product is less likely to have wrinkles, see-through defects or cracks on a raised portion drawn by the mold.

Brief Description of Drawings

Fig. 1 (a) is a partial cutaway perspective view of a male mold used for the production of a molded product, Fig. 1 (b) is a partial cutaway perspective view of a molded product obtained by 3D molding with use of the male mold of Fig. 1 (a) and the female mold of Fig. 1 (c), and Fig. 1 (c) is a partial cutaway perspective view of the female mold used for the production of the molded product.

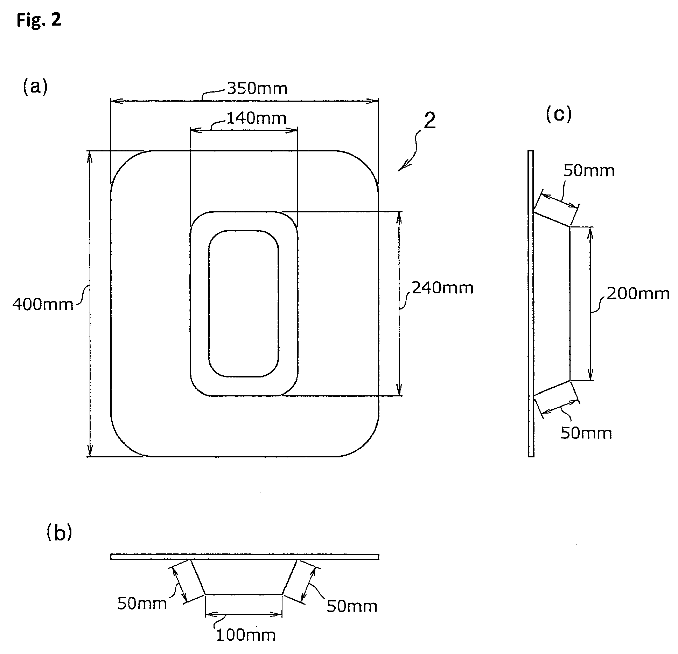

Fig. 2 (a) is a plan view of the female mold shown in Fig. 1 (c), Fig. 2 (b) is a front view of the female mold, and Fig. 2 (c) is a right side view of the female mold (the left side is symmetrical to the right side).

Fig. 3 is a plan view showing the sites (hatched circles) at which the thickness of the molded product was measured.

Fig. 4 is a plan view showing the sites (hatched rectangles) from which test pieces for the measurement of the density and the bending strength of the molded product were obtained.

Description of Embodiments

Hereinafter, embodiments of the present invention will be described in detail.

Polylactic acid fibers

The polylactic acid fibers used for the present invention are made of a polymer which has a main repeating unit of -(O-CHCH$_3$-CO)- and which is obtainable by polymerization of lactic acid or oligomers thereof. Since lactic acid has two optical isomers, D-lactic acid and L-lactic acid, there exist poly(D-lactic acid) consisting only of D-lactic acid, poly(L-lactic acid) consisting only of L-lactic acid, and a polylactic acid consisting of both. The crystallinity and the melting point of polylactic acid decrease with decrease in the optical purity of D-lactic acid or L-lactic acid contained therein. Therefore, for higher heat resistance, the optical purity is preferably 90% or higher. The optical purity is more preferably 93% or higher, and most preferably 97% or higher. As described above, the optical purity has a strong correlation with the melting point. When the optical purity is about 90%, the melting point is about 150°C. When the optical purity is 93%, the melting point is about 160°C. When the optical purity is 97%, the melting point is about 170°C. For achieving adequate moldability, the melting point of polylactic acid is preferably 200°C or lower, more preferably 190°C or lower, and most preferably 180°C or lower.

Examples of the polymerization method to give a polylactic resin used for the polylactic acid fibers include a direct polycondensation method in which lactic acid is directly subjected to dehydration condensation in the presence of an organic solvent and a catalyst, a method in which lactide together with an aromatic polyester and/or an aliphatic polyester is subjected to ring-opening copolymerization and transesterification in the presence of a ring-opening polymerization catalyst, and an indirect polymerization method in which lactic acid is dehydrated to a cyclic dimer and then subjected to ring-opening polymerization.

For achieving adequate heat resistance and moldability, the weight-average molecular weight of the polylactic acid fibers is preferably 80,000 or more, more preferably 100,000 or more, and further more preferably 120, 000 or more. Meanwhile, for retaining spinnability and stretchability, the weight-average molecular weight of the polylactic acid fibers is preferably 350, 000 or less, more preferably 300,000 or less, and further more preferably 250,000 or less.

The polylactic acid constituting the polylactic acid fibers used for the present invention contains residual monomers, such as lactide. These low-molecular-weight residues may cause dirt on a heater used in the steps of stretching or false twisting. Since the residues facilitate the hydrolysis of polylactic acid fibers and impair the durability, the amount of the low-molecular-weight residues is preferably 1% by mass or less, more preferably 0.5% by mass or less, and most preferably 0.2% by mass or less.

Preferably, all or part of the terminal COOH groups of the molecular chains of the polylactic acid fibers are blocked. By blocking part of the terminal COOH groups of the molecular chains of the polylactic acid fibers, heat resistance and hydrolysis resistance can be improved.

The concentration of the terminal COOH groups in the polylactic acid fibers is preferably in the range of 1 to 20 Eq/ton, and more preferably in the range of 1 to 10 Eq/ton. The reasons for limiting the concentration of the terminal COOH groups in the polylactic acid fibers to 20 Eq/ton or lower include the improvement of the durability of the polylactic acid fibers, which are susceptible to hydrolysis during storage or transportation by sea. In cases where the concentration is 10 Eq/ton or lower, the polylactic acid fibers have further better durability and thus are applicable to uses in severer conditions. In cases where the concentration of the terminal COOH groups is less than 1 Eq/ton, the production of the staple fibers is extremely difficult. Examples of the method for controlling the terminal COOH groups in the polylactic acid fibers include a method in which the esterification rate in the step of polymerization of polylactic acid is increased to prevent polycondensation between the terminal OH groups, and a method in which an epoxy compound is brought into reaction with polylactic acid to block the terminal COOH groups.

The residual epoxy value of the polylactic acid fibers is preferably 0.1 to 0.5 Eq/kg. In cases where the residual epoxy value is in this range, the polylactic acid fibers are suitable for storage over a longer period and also have better durability as a fiber structure, and as a result are useful in a wider range of applications. The residual epoxy value indicates the amount of an epoxy compound remaining in the polylactic acid fibers. Unreacted epoxy compound is capable of inhibiting possible further hydrolysis of polylactic acid by newly reacting with the terminal COOH groups in the polylactic acid fibers during storage or processing thereof. In cases where the residual epoxy value of the polylactic acid fibers is less than 0.1 Eq/kg, since the amount is too low, the terminal COOH groups in the polylactic acid fibers increase at an accelerating pace as soon as the hydrolysis of the polylactic acid fibers starts. This situation leads to decrease in the strength of the polylactic acid fibers and therefore is not preferable. In cases where the residual epoxy value of the polylactic acid fibers is more than 0.5 Eq/kg, since the amount is too high, the spinnability is reduced and the epoxy compound in the polylactic acid fibers bleeds. This situation is not preferable in use.

Examples of the method for controlling the residual epoxy value of the polylactic acid fibers include adjustment of the amount of the epoxy compound to be added, adjustment of the amount of the epoxy compound which reacts with the terminal COOH groups in the polylactic acid fibers, and adjustment of the number of epoxy groups in one molecule of the epoxy compound. Specifically, for adjusting the amount of the epoxy compound which reacts with the terminal COOH groups in the polylactic acid fibers, 10 to 20% by mass of an epoxy compound is added to virgin chips of polylactic acid fibers to give base chips at a first stage. The base chips are kneaded at 190 to 260°C to give master chips. Then, in a spinning extruder, virgin chips and the master chips are kneaded at 220 to 240°C for further reaction. Thus, by the reaction between the terminal COOH groups in the polylactic acid fibers and the epoxy compound, the residual epoxy value can be adjusted to within a predetermined range. In the production, the amount of the epoxy compound to be added is preferably 1 to 5% by mass relative to that of the polylactic acid fibers.

Considering the heat resistance or the reaction efficiency determined by the epoxy index, the epoxy compound is preferably 7,8-dimethyl-1,7,8,14-tetradecane tetracarboxylic acid tetrakis (oxiranylmethyl), 7-oxabicyclo[4.1.0]heptane-3,4-dicarboxylic acid diglycidyl, or triglycidyl isocyanurate. The epoxy compound is particularly preferably triglycidyl isocyanurate as a monomer because of its high reactivity and handleability. Triglycidyl isocyanurate is a powder having a melting point of about 100°C, which is easy to handle and, when melt and mixed with polylactic acid, can be in a structure where trifunctional or higher-functional epoxy compound is finely dispersed in polylactic acid. As a result, ununiformity of the melt viscosity and of the molecular weight of the resin can be decreased, and stable production of the polylactic acid fibers of the present invention can be achieved. In addition, triglycidyl isocyanurate is preferred also in that, due to its favorable crystallinity, in the production of a melt-molded product using the polylactic acid fibers for the present invention, smoking caused by the scattering of the epoxy compound can be suppressed.

The polylactic acid fibers must have a crystallization temperature on cooling of 120°C or higher. In cases where the polylactic acid fibers having a crystallization temperature on cooling of 120°C or higher are used, since the crystallization of the polylactic acid starts at a high temperature in 3D press molding, crystallization proceeds quickly and high crystallinity can be achieved even when the press cycle is rather short (less than 10 seconds). That is, since the crystallization temperature on cooling is 120°C or higher, the press time in the 3D molding, which affects the bending strength of molded products, can be shortened, enabling highly productive molding. The crystallization temperature on cooling is more preferably 125°C or higher, and further more preferably 130°C or higher.

Generally, without the use of a crystal nucleating agent, polylactic acid fibers do not crystallize on cooling, and by cooling a heat-treated nonwoven fabric from 200°C to about 50°C, a molded product having a bending strength of 20 N/mm$^2$ or higher can be obtained. In this case, about 15 seconds of 3D molding time is required, and a shorter molding time results in a molded product having a poor bending strength.

In cases where talc is used according to a publicly known technique relating to polylactic acid fibers, the crystallization temperature on cooling is 99°C, and by cooling a heat-treated nonwoven fabric from 200°C to 99°C, a molded product having a bending strength of 20 N/mm$^2$ or higher can be obtained. In this case, about 10 seconds of 3D molding time is required, and a shorter molding time results in a molded product having a poor bending strength.

In the present invention, by further improvement of the polylactic acid fibers, the crystallization temperature on cooling can be raised to 120°C or higher, and by cooling a heat-treated nonwoven fabric from 200°C to 120°C, a molded product having a bending strength of 20 N/mm$^2$ or higher can be obtained. In this case, about 8 seconds of 3D molding time is sufficient, which is about 2 seconds shorter than in the case talc is used.

The polylactic acid fibers of which the crystallization temperature on cooling is 120°C or higher can be obtained using an organic or inorganic crystal nucleating agent. In particular, carbon black, which is an inorganic crystal nucleating agent, is preferred because carbon black allows crystal nuclei to be formed in a short period of time and raises the crystallization temperature on cooling to 120°C or higher. This seems to be due to the minute particle diameter thereof. The particle diameter of the carbon black is preferably 50 nm or less, more preferably 40 nm or less, and further more preferably 30 nm or less.

For achieving adequate moldability and production cost, the amount of the crystal nucleating agent to be added is, regarding the lower limit, preferably 0.01% by mass or higher, more preferably 0.1% by mass or higher, and further more preferably 0.5% by mass or higher relative to that of the polylactic acid fibers. The amount of the crystal nucleating agent to be added is, regarding the upper limit, preferably 10.0% by mass or lower, more preferably 5% by mass or lower, and further more preferably 2% by mass or lower relative to that of the polylactic acid fibers.

Use of carbon black as a crystal nucleating agent removes static electricity in the production of a nonwoven fabric, leading to excellent workability. Further, since the polylactic acid fibers are blackened, dispersibility thereof among natural fibers, such as kenaf fibers can easily be seen, allowing easy quality control.

The polylactic acid fibers may contain, in addition to the crystal nucleating agent, particles, a flame retarder, a plasticizer, an antistatic, an antioxidant, an ultraviolet absorbent, and a lubricant, such as ethylenebis(stearic acid amide), etc.

The cross-sectional shape of the polylactic acid fibers may be, for example, a round section, a hollow section, a multiporous hollow section, a multilobal section, such as a trilobal section (a triangle section, a Y section, a T section, etc.), a flattened section, a W section, an X section, or the like.

The tensile strength of the polylactic acid fibers measured according to JIS L 1015 (1999) 8.4.1 Method A is preferably 0.5 cN/dtex or higher. A tensile strength less than 0.5 cN/dtex significantly worsens the passing rate in a carding process. The tensile strength is more preferably 1.0 cN/dtex or higher, and further more preferably 2.0 cN/dtex or higher.

The tensile elongation of the polylactic acid fibers is preferably 60% or higher. Use of the polylactic acid fibers having a tensile elongation of 60% or higher for a nonwoven fabric improves the elasticity and the nonwoven fabric's followability to the mold, prevents tears in the nonwoven fabric, and as a result achieves a favorable appearance quality of the molded product. The tensile elongation of the polylactic acid fibers is more preferably 65% or higher, and further more preferably 70% or higher.

The dry-heat shrinkage of the polylactic acid fibers measured according to JIS L 1015 (1999) 8.15 b) is preferably 5% or less. The dry-heat shrinkage of 5% or less contributes to a higher dimensional stability of the molded product. A too high dry-heat shrinkage causes wrinkles on the nonwoven fabric in 3D press molding and may decrease the appearance quality of the molded product.

The polylactic acid fibers are preferably crimped. Crimps strengthen intertwinement with natural fibers, such as kenaf fibers and improve the passing rate in a carding process. The number of crimps is preferably 6 to 20 crimps/25 mm, and more preferably 8 to 15 crimps/25 mm. The percentage of crimp is preferably 10 to 50%, and more preferably 15 to 30%.

The fineness of the polylactic acid fibers measured according to JIS L 1015 (1999) 8.5.1 Method A is preferably 0.5 to 100 dtex. A fineness less than 0.5 dtex significantly worsens the passing rate in a carding process, and makes it difficult to obtain a spun yarn or a nonwoven fabric. Meanwhile, a fineness more than 100 dtex decreases fiber dispersibility in the production of a nonwoven fabric. The fineness is more preferably 1.0 to 10 dtex, and further more preferably 3.0 to 7.0 dtex.

The fiber length of the polylactic acid fibers measured according to JIS L 1015 (1999) 8.4.1 Method A is preferably 5 to 150 mm. A fiber length shorter than 5 mm causes insufficient intertwinement of fibers which constitute the nonwoven fabric, and tends to decrease the strength of the resulting fiberboard. Meanwhile, a fiber length longer than 150 mm makes it difficult to uniformly disperse the fibers in the production of a nonwoven fabric. As a result, the productivity decreases and the strength tends to be uneven, that is, partially decrease. The fiber length of the polylactic acid fibers is more preferably 10 to 100 mm, and further more preferably 30 to 70 mm.

The polylactic acid fibers are preferably provided with a spinning oil containing a lubricating agent. The oil improves the slippage of the polylactic acid fibers and also improves, in addition to spinning and stretching, the passing rate in a carding process. Moreover, the oil reduces the crimp unevenness of the fibers, improves the appearance quality of fluff etc., and also improves the fiber openability and the fiber dispersibility in the fiber structure. Examples of the lubricating agent include a fatty acid ester, a polyhydric alcohol ester, an ether ester, a polyether, a silicone, a mineral oil, etc. The lubricating agents may be used alone or as a mixture of two or more thereof. The amount of the oil to be adhered to the fibers is preferably 0.1 to 2.0% by mass, and more preferably 0.2 to 0.7% by mass relative to that of the polylactic acid fibers. The oil in an amount within the range improves the passing rate in a carding process. In addition to the lubricating agent, the oil preferably contains an emulsifier for improving the adherence or the permeability of the oil into the yarns by emulsifying the oil in water for decreasing the viscosity, an antistatic agent, an ionic surfactant, a sizing agent, a rust inhibitor, an antiseptic, an antioxidant, etc.

The polylactic acid fibers can be produced by a publicly known methods, such as a method of melt spinning of a polylactic resin. The yarn consisting of a melt-spun polylactic resin is cooled, provided with an oil, and then taken up. A preferable taking-up speed is 400 to 2,000 m/min. Subsequently, unstretched yarns of the polylactic acid fibers are paralleled and stretched. The yarns are preferably paralleled so that the total fineness of the tow after stretching is 50,000 to 1,000,000 dtex. To obtain a uniform tow, the stretching of the polylactic acid fibers is preferably carried out in a warm bath at 60 to 100°C. The stretch ratio of the polylactic acid fibers is preferably 1.5 to 6. The stretch ratio in the range gives polylactic acid fibers having sufficient strength. An oil as a finishing agent may be provided if needed after stretching or after crimping, which is described below. After the stretching, it is preferable to crimp the stretched yarns. Examples of the method for crimping include the stuffing box method, heated gear method, and air jet method. The polylactic acid fibers in the form of a tow after crimping are preferably subjected to a relaxation heat treatment. As a result of the relaxation heat treatment, crimps can be maintained and polylactic acid fibers of which the dry-heat shrinkage is low can be produced. The relaxation heat treatment is preferably performed at 100 to 170°C because the dry-heat shrinkage of polylactic acid fibers treated in this temperature range will be 5% or less. The temperature in the relaxation heat treatment is more preferably 120 to 165°C, and further more preferably 140 to 160°C. Subsequently, the polylactic acid fibers can be cut into pieces of a desired fiber length by a cutting device, for example, a rotary cutter.

Natural fibers

Examples of the natural fibers used for the present invention include wood pulp, bagasse, wheat straw, reed, papyrus, bamboo, pulp, cotton, kenaf, roselle, hemp, linum, ramie, jute, hemp, sisal, abaca, coconut, banana, etc., which may be used alone, but preferably one or more kinds thereof are contained. In particular kenaf fibers have an excellent strength compared to other natural fibers. In addition, the length of kenaf fibers is relatively long. Kenaf is an annual belonging to easily cultivable herbaceous species, and grows extremely fast in the tropical and temperate regions. The bast of kenaf has a high cellulose content of 60% by mass or higher, is highly strong, and is inexpensive. Therefore, it is preferred to use kenaf fibers harvested from kenaf bast. Accordingly, the natural fibers of the present invention preferably contain kenaf fibers. In cases where kenaf fibers are contained, the percentage relative to all the natural fibers is preferably 30% by mass or higher, more preferably 50% by mass or higher, and further more preferably 90% by mass or higher.

To obtain kenaf fibers, kenaf stalks are harvested, retted, and then cut into pieces of a desired fiber length with use of a guillotine cutter. Retting treatment is a method for separating bast fibers from the core part of kenaf. In this process, the separation can be facilitated by bacterial fermentation in the stalks. For the fermentation, there are a method in which kenaf stalks are left on the ground to be fermented with the moisture in the air, and a method in which kenaf stalks are soaked and fermented in the water of a river or a swamp. In the fermentation, kenaf fibers generate an unpleasant odor. To reduce the odor, it is preferred to ferment kenaf fibers in clean river water. In addition, it is more preferred to treat kenaf fibers in a sodium hydroxide aqueous solution at 100°C for 20 minutes to further reduce the odor. The concentration of the sodium hydroxide aqueous solution is preferably 10% or less, more preferably 5% or less, and further more preferably 2% or less. With use of such a solution, odor components can be removed while the strength of kenaf fibers is retained. In cases where kenaf fibers are treated in a dirty, stagnated swamp etc. , a strong unpleasant odor may be generated.

In the natural fibers, such as kenaf fibers, the amounts of 1-methoxy-2-propyl acetate ($C_6H_{12}O_3$), 2-methoxyethyl acetate ($C_5H_{10}O_3$), and formaldehyde are preferably each 2 $\mu$g/kg or less measured according to the method for measuring the odor amount of (2) Natural fibers, such as kenaf fibers described later (see paragraph 0081) in Examples. Each of the amounts is more preferably 1 $\mu$g/kg or less, and further more preferably 0.5 $\mu$g/kg or less. As for acetic acid, trimethyl benzene, and acetaldehyde, each of the amounts is preferably 10 $\mu$g/kg or less. Each of the amounts is more preferably 5 $\mu$g/kg or less, and further more preferably 3 $\mu$g/kg or less. By processing such kenaf fibers into a nonwoven fabric, a nonwoven fabric having suppressed odor can be obtained.

The natural fibers, such as kenaf fibers, preferably have a tensile strength of 1.0 cN/dtex or higher measured according to the method for measuring the tensile strength and tensile elongation of (2) Natural fibers, such as kenaf fibers described later (see paragraph 0079) in Examples. With use of a nonwoven fabric comprising the natural fibers, such as kenaf fibers, having a tensile strength of 1.0 cN/dtex or higher, a molded product having a high bending strength can be obtained. The tensile strength of the natural fibers is more preferably 1.5 cN/dtex or higher, and further more preferably 2.0 cN/dtex or higher.

The natural fibers, such as kenaf fibers, preferably have a fiber length of 150 mm or less measured according to the method for measuring the fiber length of (2) Natural fibers, such as kenaf fibers described later (see paragraph 0077) in Examples. When the mean fiber length is too long, it is difficult to uniformly disperse the natural fibers, such as kenaf fibers, and the polylactic acid fibers in the production of a nonwoven fabric. As a result, the productivity decreases and the strength of the resulting nonwoven fabric and molded product may become uneven, that is, partially decrease. The mean fiber length of the natural fibers is more preferably 120 mm or less, and further more preferably 100 mm or less.

The natural fibers, such as kenaf fibers, preferably have a fiber diameter of 200 $\mu$m or less measured according to the method for measuring the fiber diameter of (2) Natural fibers, such as kenaf fibers described later (see paragraph 0078) in Examples. When the mean fiber diameter is 200 $\mu$m or less, the natural fibers and the polylactic acid fibers are uniformly dispersed in the production of a nonwoven fabric, and a uniform nonwoven fabric can be formed. The fiber diameter of the natural fibers is more preferably 150 $\mu$m or less, and further more preferably 100 $\mu$m.

The natural fibers, such as kenaf fibers, preferably have five or more duct-derived pores measured according to the method for measuring the number of pores of (2) Natural fibers, such as kenaf fibers described later (see paragraph 0082) in Examples. When the number of duct-derived pores in the kenaf fibers is less than five, the tensile strength is low and the properties of the resulting nonwoven fabric and molded product may be unfavorably affected. The number of pores is more preferably 10 or more, and further more preferably 20 or more.

The natural fibers, such as kenaf fibers, preferably have a moisture content of 20% by mass or less measured according to the method for measuring the moisture content of (2) Natural fibers, such as kenaf fibers described later (see paragraph 0080) in Examples. When the moisture content is more than 20% by mass, water vapor is generated in hot press molding, and a rupture at the time of releasing the press may damage the fiberboard. The moisture content is more preferably 15% by mass or less, and further more preferably 10% by mass or less.

Nonwoven fabric

The nonwoven fabric used for the present invention can be produced by blending the polylactic acid fibers and the natural fibers, such as kenaf fibers, and subsequent opening and intertwining. First, the polylactic acid fibers and the natural fibers are blended with use of an opener. The obtained blended fibers are opened by the carding method or the airlaid method, and formed into a web. Further, a plurality of the obtained webs are laminated. Then, the laminated body is subjected to needle-punching for intertwining the fibers to give a dense nonwoven fabric. Kenaf fibers have a low tensile elongation and an uneven fiber diameter, and there are joints in the fibers. For the reasons, while passing through the nonwoven-fabric-forming process in which opening, carding or airlaying, and needle-punching are performed, the fibers tend to be torn into shorter pieces. In particular, the conditions of needle-punching greatly affect. The total needle density in a needle-punched nonwoven fabric is preferably 30 to 200 needles/cm$^2$. The needle density is more preferably 40 to 150 needles/cm$^2$, and further more preferably 50 to 100 needles/cm$^2$. Excessive needle-punching at a needle density exceeding 200 needles/cm$^2$ tends to destroy the natural fibers, such as kenaf fibers. As a result, the fiber length becomes shorter, the percentage of the natural fibers having a fiber length of 45 mm or longer falls to less than 30% by mass, and the intertwining between the polylactic acid fibers and the natural fibers, such as kenaf fibers, tends to decrease. Needle-punching at a needle density less than 30 needles/cm$^2$ also tends to weaken the intertwining between the polylactic acid fibers and the natural fibers, such as kenaf fibers, decrease the tensile strength of the nonwoven fabric, and accordingly decrease the tensile strength of the resulting molded product. The needle density in a needle-punched nonwoven fabric is the actual total number of punctures by the needles of a needle-punching device, and can be adjusted by setting the number of the needles of the needle-punching device and the running speed of the nonwoven fabric.

The nonwoven fabric needs to have a tensile strength of 20 N/cm$^2$ or higher measured according to the method for measuring the tensile strength and tensile elongation of (3) Nonwoven fabric described later (see paragraph 0088) in Examples. The tensile strength is more preferably 50 N/cm$^2$ or higher, and further more preferably 100 N/cm$^2$ or higher. When the tensile strength is within the above range, the fiber intertwinement on a raised portion formed by the mold in 3D press molding is not torn, and a molded product not having wrinkles, see-through defects, or cracks can be formed. Such a preferred nonwoven fabric having a tensile strength of 20 N/cm$^2$ or higher can be obtained, for example, when the percentage of the natural fibers, such as kenaf fibers, having a fiber length of 45 mm or longer is 30% or more in fiber length frequency distribution (histogram) of the natural fibers, such as kenaf fibers in the nonwoven fabric. In the press molding, in which the internal temperature of a nonwoven fabric reaches near 200°C, the strength and intertwining of the natural fibers, such as kenaf fibers, are particularly important as compared with the physical properties of the polylactic acid fibers, and by using a certain amount or more of the natural fibers having a certain fiber length or longer, strong fiber intertwining can be achieved. In fiber length frequency distribution (histogram) of the natural fibers, such as kenaf fibers, fibers having a fiber length of 45 mm or longer more preferably accounts for 40% or more, and further more preferably accounts for 50% or more.

The weight per unit area of the nonwoven fabric is preferably 450 g/m$^2$ or more. When the weight per unit area of the nonwoven fabric is less than 450 g/m$^2$, thinning occurs on a raised portion formed by drawing of the mold in 3D press molding, resulting in see-through defects or cracks. The weight per unit area of the nonwoven fabric is more preferably 700 g/m$^2$ or more, and further more preferably 1,000 g/m$^2$ or more.

The tensile elongation measured according to the method for measuring the tensile strength and tensile elongation of (3) Nonwoven fabric described later (see paragraph 0088) in Examples is preferably 30% or higher. When the tensile elongation is 30% or higher, the nonwoven fabric's followability to the mold during 3D press molding is improved on the rising portion drawn by the mold, and a molded product not having wrinkles, see-through defects, or cracks can be formed. The tensile elongation of the nonwoven fabric is more preferably 40% or higher, and further more preferably 50% or higher.

The nonwoven fabric needs to have a tensile stress of 80 N/cm$^2$ or less at 30% tensile elongation in a 200°C atmosphere measured according to the method for measuring the tensile strength and tensile elongation of (3) Nonwoven fabric described later (see paragraph 0088) in Examples. The tensile stress at 30% tensile elongation in a 200°C atmosphere is more preferably 60 N/cm$^2$ or less, and further more preferably 50 N/cm$^2$ or less. The tensile stress at 30% tensile elongation in a 200°C atmosphere in the present invention is specified considering the molding quality of a raised portion drawn by the mold in 3D press molding of a nonwoven fabric.

When the tensile stress at 30% tensile elongation in a 200°C atmosphere is 80 N/cm$^2$ or less, the nonwoven fabric shows good followability to the mold at a corner of a raised portion drawn by the mold without resistance, and a molded product not having wrinkles at the corner can be formed. Such a preferred nonwoven fabric having a tensile stress of 80 N/cm$^2$ or less at 30% tensile elongation in a 200°C atmosphere can be obtained when the weight per unit area of the nonwoven fabric is 3, 000 g/m$^2$ or less. When the weight per unit area of the nonwoven fabric is 3,000 g/m$^2$ or less, a flexible nonwoven fabric that shows good followability to the mold at a corner of a raised portion drawn by the mold can be formed. When the weight per unit area of the nonwoven fabric is more than 3,000 g/m$^2$, which means poor elongation, the area density of the nonwoven fabric becomes greater at a corner of a raised portion drawn by the mold, causing wrinkles. The weight per unit area of the nonwoven fabric is more preferably 2, 500 g/m$^2$ or less, and further more preferably 2,000 g/m$^2$ or less.

The air permeability of the nonwoven fabric is preferably 30 cc/cm$^2$·sec or higher. When the air permeability is

30 cc/cm$^2$·sec or higher, water vapor generated from the natural fibers, such as kenaf fibers, during molding with use of a hot press machine easily escapes, and a molded product with an excellent appearance quality can be obtained. When the air permeability is less than 30 cc/cm$^2$·sec, water vapor generated from the natural fibers, such as kenaf fibers, during hot press molding cannot escape to the ambient air and remains in the nonwoven fabric. Therefore, at the time of releasing the press, rupture can occur in the vicinity of the water vapor and can damage the molded product, resulting in decreased strength of the molded product. The air permeability of the nonwoven fabric is more preferably 40 cc/cm$^2$·sec or higher, and further more preferably 50 cc/cm$^2$·sec or higher.

Regarding the lower limit, the thickness of the nonwoven fabric is preferably 1 mm or more, more preferably 2 mm or more, and further more preferably 5 mm or more, and the upper limit is preferably 300 mm or less, more preferably 200 mm or less, and further more preferably 50 mm or less. When the weight per unit area and the thickness of the nonwoven fabric are within the above ranges (450 to 3, 000 g/m$^2$ and 1 to 300 mm), the nonwoven fabric has an excellent workability and the molded product resulting from the nonwoven fabric is excellent in bending strength and appearance quality.

In the nonwoven fabric, the mass ratio of the polylactic acid fibers and the natural fibers, such as kenaf fibers, is preferably (20 to 60):(80 to 40). The percentage of the polylactic acid fibers less than 20% by mass tends to decrease the bondability with the natural fibers, weaken the intertwining between the polylactic acid fibers and the natural fibers, decrease the tensile strength of the nonwoven fabric, and decrease the strength of the resulting molded product. The percentage of the polylactic acid fibers more than 60% by mass tends to increase the production cost. The mass ratio of the polylactic acid fibers and the natural fibers, such as kenaf fibers, is more preferably (25 to 55) : (75 to 45), and further more preferably (30 to 50):(70 to 50).

In the nonwoven fabric, the amounts of 1-methoxy-2-propyl acetate ($C_6H_{12}O_3$), 2-methoxyethyl-acetate ($C_5H_{10}O_3$), and formaldehyde are preferably each 2 µg/kg or less when measured according to the method for measuring the odor amount of (3) Nonwoven fabric described later (see paragraph 0090) in Examples. Each of the amounts is more preferably 1 µg/kg or less, and further more preferably 0.5 µg/kg or less. As for acetic acid, trimethyl benzene, and acetaldehyde, each of the amounts is preferably 10 µg/kg or less. Each of the amounts is more preferably 5 µg/kg or less, and further more preferably 3 µg/kg or less. With use of this nonwoven fabric in the molding, a molded product having suppressed odor can be obtained.

Molded product

The molded product of the present invention can be obtained by press molding of the above nonwoven fabric. Unlike injection molding or extrusion molding, press molding can efficiently produce a relatively large molded product, such as a cube 1 m on a side. Since a nonwoven fabric is used as a material, a part or the whole of a molded product is usually in the form of a plate.

An exemplary method for producing a molded product is as follows. First, a nonwoven fabric is cut into pieces, and the pieces are laminated so that a desired weight per unit area is achieved. The nonwoven fabric laminate is subjected to hot pressing and cold pressing to be formed into a preboard in the form of a flat plate. Then, the preboard is heat-processed and subjected to 3D molding with use of a mold. Regarding the molding conditions, the ranges shown below are preferred for a higher bending strength.

- Hot pressing conditions: surface plate temperature of 150 to 220°C, pressure of 10 to 5,000 kN/m$^2$, and pressing time of 5 to 240 seconds
- Cold pressing conditions: surface plate temperature of 10 to 40°C, pressure of 10 to 5, 000 kN/m$^2$, and pressing time of 5 to 240 seconds
- Heat process condition: the preboard is heated until the internal temperature reaches 150 to 220°C.
- 3D molding conditions: mold temperature of 10 to 40°C, pressure of 10 to 5,000 kN/m$^2$, and pressing time of 5 to 240 seconds

In another method for producing a molded product, first, a nonwoven fabric is cut into pieces, and the pieces are laminated so that a desired weight per unit area is achieved. The nonwoven fabric laminate is heat-processed and subjected to 3D molding with use of a mold. This method is preferred because fewer steps are required for the molding. Regarding the molding conditions, the ranges shown below are preferred for a higher bending strength.

- Heat process condition: the nonwoven fabric is heated until the internal temperature reaches 170 to 220°C.
- 3D molding conditions: mold temperature of 10 to 40°C, pressure of 10 to 5,000 kN/m$^2$, and pressing time of 5 to 240 seconds

In cases where a single piece of nonwoven fabric is enough for a desired weight per unit area, lamination is not required.

A roll press machine, a flat pressing machine, etc. can be used for the pressing. For improved strength of the molded product, a hot press machine having a pair of upper and lower hot surface plates is preferred because sufficient hot press time can be assured.

For the heat treatment, hot air, far-infrared heat, and microwave heat can be used, and far-infrared heat and microwave heat are preferred because of their capability of providing heat into a nonwoven fabric in a short period of time.

The 3D molding is preferably 3D press molding with use of a cold press machine which is equipped with a general-purpose cooling means using air, water, or the like and into which a mold is mounted. In particular, the press time (time from the start of pressurization to release) for a preboard or a nonwoven fabric after heat treatment is preferably 8 seconds or less, more preferably 7.5 seconds or less, and further more preferably 7 seconds or less. Such 3D molding can shorten molding time and reduce the production cost.

The volumetric mass density of the obtained molded product is preferably 0.4 to 1.2 $g/cm^3$. A molded product with a density of 0.4 to 1.2 $g/cm^3$ can have an improved bending strength. In cases where the density is less than 0.4 $g/cm^3$, strength required for an automotive interior material or an architectural material cannot be obtained. A density exceeding 1.2 $g/cm^3$ is not preferred because such a molded product is not lightweight. The volumetric mass density of a molded product is more preferably 0.5 to 1.1 $g/cm^3$, and further more preferably 0.6 to 1.0 $g/cm^3$.

The bending strength of the molded product is preferably 10 $N/mm^2$ or higher, more preferably 20 $N/mm^2$ or higher, and further more preferably 25 $N/mm^2$ or higher. A molded product with a bending strength of less than 10 $N/mm^2$ is not strong enough and cannot appropriately be applied to an automotive interior material or an architectural material.

The molded product preferably has a sensory score of 3 (obvious odor but not unpleasant) or lower judged according to the method for odor sensory test of (4) Molded product described later (see paragraph 0096) in Examples. The value is more preferably 2 (odor but not unpleasant) or lower, and further more preferably 1 (odorless). This can be achieved by molding the nonwoven fabric of the present invention under the above heat-treatment conditions. If the highest temperature reached in the heat treatment exceeds 220°C, the natural fibers, such as kenaf fibers, in the nonwoven fabric is burned, and the molded product gives off a strong unpleasant odor.

Examples

Hereinafter, Examples of the present invention will be illustrated, but the present invention is not limited thereto. The invention can be various modified or corrected without departing the technical scope thereof.

Measuring methods

(1) Polylactic acid fibers

A. Fineness

The fineness was measured according to JIS L 1015 (1999) 8.5.1 Method A. A small amount of sample fibers were paralleled with a metallic comb and placed on a piece of flock paper on a cutting table. With the sample tensioned by a moderate stretching force, a gauge board was applied to the sample fibers and the sample fibers were cut with a razor blade into a length of 30 mm. The fibers were counted and a set of 300 fibers was measured for the mass to determine the apparent fineness. A corrected fineness was calculated using the apparent fineness and the equation given below, and the arithmetic mean value was regarded as the fineness.

$$\text{Corrected fineness (dtex)} = D' \times (100 + Rc)/(100 + Re)$$

In this equation, D' is apparent fineness (dtex), Rc is standard moisture regain (%), and Re is equilibrium moisture regain (%).

B. Fiber length

The fiber length was measured according to JIS L 1015 (1999) 8.4.1 Method A. With use of 800 mg of sample fibers, a staple diagram was prepared, and the diagram was equally divided into 50 fiber-length groups. The fiber length was measured at each boundary between the groups and at both ends of the diagram. To the mean of the fiber lengths at the ends, the 49 boundary fiber lengths were added, and the sum was divided by 50 to calculate the mean fiber length (mm). The calculation was conducted twice and the mean value was regarded as the fiber length.

C. Tensile strength and tensile elongation

The tensile strength and tensile elongation were measured according to JIS L 1015 (1999) 8.7.1. The test was conducted setting the tension speed at 20 mm/min and the distance between grips at 20 mm, and the tensile strength and tensile elongation were calculated using the equations given below. The test was repeated 10 times and the arithmetic mean of the 10 measurements was calculated.

$$\text{Tensile strength (cN/dtex)} = SD/F0$$

In this equation, SD is the maximum load (cN) and F0 is the monofilament fineness of sample (dtex).

$$\text{Tensile elongation (\%)} = (E1 - E2)/(L + E1) \times 100$$

In this equation, E1 is relaxation (mm), E2 is elongation at the maximum load (mm), and L is the length between grips (mm).

D. Dry-heat shrinkage

The dry-heat shrinkage was measured according to JIS L 1015 (1999) 8.15 b). Dividing lines were prepared by the same procedure as in the measurements of the tensile strength and tensile elongation according to JIS L 1015 (1999) 8.7.1 (except that the spatial distance was set at 25 mm), and the distance (mm) under the initial load was read. The sample was taken out of the equipment, hung in a dryer at 150°C for 30 minutes, taken out of the dryer, and left to cool down to room temperature. Then, the sample was set in the equipment again, and the distance (mm) between grips under the initial load was read. The dry-heat shrinkage was calculated using the equation given below.

$$\text{Dry-heat shrinkage (\%)} = ((L - L')/L) \times 100$$

L: distance (mm) between grips under initial load before 150°C treatment
L' : distance (mm) between grips under initial load after 150°C treatment

E. Molecular weight

Polylactic acid was dissolved in chloroform to give a test solution and measured for the number average molecular weight (Mn) and the weight average molecular weight (Mw) in polystyrene equivalent by gel permeation chromatography (GPC) under conditions of column temperature of 40°C and flow rate of 1 mL/min. The measurement was repeated 5 times and the arithmetic mean was calculated.

F. Particle diameter

As the particle diameter, median diameter d50 (the cumulative 50% particle diameter determined so that the number of particles above this value is equal to the number of particles below this value, in number-based distribution) was measured by laser diffractometry with use of SALD-7100 made by Shimadzu. The test was repeated 5 times and the arithmetic mean was regarded as the particle diameter.

G. Melting point and crystallization temperature on cooling

The sample in an amount of 2.0 mg was measured with use of a differential scanning calorimeter DSC-60 made by Shimadzu while the temperature was increased at a rate of 10°C/min to 250°C, and after a holding time of 5 minutes, decreased at 10°C/min to 30°C. The temperature at the extreme value on the obtained melting endothermic curve (on heating) was determined as the melting point (°C) and the temperature at the crystallization extreme value on the obtained exothermic curve (on cooling) was determined as the crystallization temperature on cooling (°C). The test was repeated 5 times and the arithmetic mean of the 5 measurements was calculated.

G. Residual epoxy value

The residual epoxy value was measured according to JIS K 7236 (2001), Determination of epoxy equivalent in epoxy resins. The sample was placed in a beaker, and dissolved in 20 mL of chloroform added thereto. To this, 40 mL of acetic acid and 10 mL of a solution of tetraethyl ammonium bromide in acetic acid were added, and potentiometric titration with a 0.1 mol/L solution of perchloric acid in acetic acid was carried out. Subsequently, to correct the quantity of the 0.1 mol/L perchloric acid in acetic acid consumed by the sample, only chloroform and acetic acid were added to the sample. The titration was carried out, and the obtained value was deducted for the correction. Thus, the residual epoxy value was calculated.

H. Terminal COOH group concentration

The sample was weighed and dissolved in o-cresol, an appropriate volume of dichloromethane was added thereto, and titrated with a 0.02 N solution of KOH in methanol. In this process, oligomers such as lactides, i.e., cyclic dimers of lactic acid are hydrolyzed to form terminal COOH groups, and therefore, the content determined above represents the total content of the terminal COOH groups of polymers, the terminal COOH groups derived from monomers, and the terminal COOH groups derived from oligomers. The total concentration was regarded as the terminal COOH group concentration.

I. Number of crimps

The number of crimps was measured according to JIS L 1015 (1999) 8.12.1. Dividing lines were prepared by the same procedure as in the measurements of the tensile strength and tensile elongation according to JIS L 1015 (1999) 8.7.1 (except that the spatial distance was set at 25 mm). Sample fibers were taken from a few portions where crimps were not damaged, each fiber was extended with a slack of 25 $\pm$ 5% relative to the spatial distance, and both ends were fixed on a piece of paper with the dividing lines with use of an adhesive. Each sample fiber was attached to the grips of a crimp tester. After a slip of the paper was cut off and an initial load (0.18 mN x indicated density in tex) was applied to the sample fiber, the distance between the grips (spatial distance in mm) was read and the number of crimps was counted to calculate the number of crimps per 25 mm. The measurement was repeated 20 times and the arithmetic mean was regarded as the number of crimps.

J. Percentage of crimp

The percentage of crimp was measured according to JIS L 1015 (1999) 8.12.2. The length of the sample fiber after applying an initial load (0.18 mN x indicated density in tex) and the length after applying an additional load (4.41 mN x indicated density in tex) were measured and the percentage of crimp was calculated by the following equation.

$$Cp = \{(b - a)/b\} \times 100$$

Cp: percentage of crimp (%)
a: Length under initial load (mm)
b: Length under load of (4.41 mN x indicated density in tex) (mm)

(2) Natural fibers, such as kenaf fibers

A. Fiber length

From 1 kg of natural fibers, such as kenaf fibers, 100 fibers were randomly taken. Fibers that were broken or torn were not selected as the test pieces. The selected natural fibers, such as kenaf fibers, were tensioned by a moderate stretching force and applied onto a pasteboard on which double sided tape was adhered beforehand, and the fiber length was measured with a caliper to an accuracy of 1 mm. The arithmetic mean of the 100 fibers was regarded as the fiber length.

B. Fiber diameter

From 1 kg of natural fibers, such as kenaf fibers, 60 fibers were randomly taken, and measured for the cross-sectional diameter (diameter of the circumscribed circle) with use of a magnifier of a scanning electron microscope. The arithmetic mean of the 60 fibers was regarded as the fiber diameter. The fiber diameter was measured to an accuracy of 0.1 μm.

C. Tensile strength and tensile elongation

Natural fibers, such as kenaf fibers, were left under standard conditions (temperature: 20°C, relative humidity: 65%) for 48 hours. From the natural fibers, such as kenaf fibers, fibers with an amount of 600 dtex (portions not broken or torn were used) were taken 10 times to obtain 10 fiber bundles (4.5 mg when fiber length was 75 mm). Onto two pieces of pasteboard, the fiber bundle was attached with use of double sided tape so that the distance between the two pieces was 10 mm. The pasteboard portions of the fiber bundle were attached to the grips of a tensile tester, where the distance between the grips was 10 mm. Load was applied at a tension speed of 10 mm/min until the fiber bundle was broken off. By the following equation, the arithmetic mean of 10 measurements was calculated.

$$\text{Tensile strength (cN/dtex)} = [\text{tensile strength under maximum load (cN)}]/[\text{amount of fibers 600 dtex}]$$

$$\text{Tensile elongation (\%)} = [\text{elongation under maximum load (mm)}]/[\text{distance between grips 10 (mm)}]$$

D. Moisture content

From 1 kg of natural fibers, such as kenaf fibers, 10 g of fibers were taken 3 times, and placed in a weighing bottle. The test pieces were left under standard conditions (temperature: 20°C, relative humidity: 65%) for 48 hours and then measured for the initial weight with use of an electric balance. After that, the fibers were subjected to drying treatment at 105°C for 48 hours (this state is called absolute dry state) and then measured for the weight. The moisture content was calculated by the following equation. While the fibers were left and dried, the lid of the weighing bottle was not used.

$$\text{Moisture content (\%)} = [\text{initial mass (g)} - \text{mass in absolute dry state (g)}]/[\text{mass in absolute dry state (g)}] \times 100$$

E. Amount of odor

Two samples each in an amount of 22 g were taken from natural fibers, such as kenaf fibers. Each of the samples was placed in a 600-mL DURAN bottle, hermetically sealed, and left under standard conditions (temperature: 20°C, relative humidity: 65%) for 24 hours. After that, high purity nitrogen gas was introduced into the DURAN bottle to collect, into a sampling tube, 2 L of the atmosphere in the bottle.

As for aldehydes (acetaldehyde and formaldehyde), the component collected in the sampling tube (DNPH SILICA sampler) was eluted with 5 mL of acetonitrile and concentrated ten-fold by nitrogen purging. The test solution was introduced into GC/MS (a mass spectrometer to which a gas chromatograph is directly connected) for analysis, and the amount of odor was calculated by the following equation.

$$\text{Amount of aldehyde odor (μg/kg)} = [\text{component amount in extract (μg/mL)} \times \text{volume of extract (mL)} \times \text{molecular weight of aldehyde} \times 1,000]/[\text{concentration rate} \times (\text{molecular weight of aldehyde} + 180)/\text{amount of sample (g)}]$$

As for VOC (volatile organic compounds), the component collected in the sampling tube (Carbon Trap 400) was desorbed by heat and introduced into GC/MS. The amount of odor was calculated by the equation given below.

$$\text{Amount of odor of VOC (μg/kg)} = \text{component amount (ng)/amount of sample (g)}$$

F. Number of pores

The cross-section of a natural fiber, such as a kenaf fiber was observed with use of SEM (scanning electron microscope), and the number of duct-derived pores was counted. The total number of pores in 10 natural fibers, such as kenaf fibers, was counted and divided by 10. The arithmetic mean value per fiber was regarded as the number of pores.

(3) Nonwoven fabric

A. Mixture ratio

Five square test pieces of 50 mm x 50 mm were taken from different sites of the sample. The test pieces were left under standard conditions (temperature: 20°C, relative humidity: 65%) for 48 hours and then measured for the initial weight with use of an electric balance. Then, the test pieces were immersed in chloroform to have the polylactic acid fibers completely dissolved. After that, the test pieces were left under standard conditions (temperature: 20°C, relative humidity: 65%) for 48 hours and then measured for the weight after being left. The mixture ratio was obtained by the following equation.

$$\text{Mixture ratio of polylactic acid fibers (\%)} = [\text{initial weight - mass after being left}]/\text{initial weight} \times 100$$

$$\text{Mixture ratio of natural fibers (such as kenaf fibers) (\%)} = [100 - \text{mixture ratio of polylactic acid fibers}]$$

B. Fiber length frequency distribution (histogram) of natural fibers, such as kenaf fibers

A square piece of 200 mm x 200 mm was taken from a nonwoven fabric comprising polylactic acid fibers and natural fibers, such as kenaf fibers, and 100 natural fibers, such as kenaf fibers, were randomly taken. Fibers that were broken or torn were not selected as the test pieces. The selected natural fibers, such as kenaf fibers, were tensioned by a moderate stretching force and applied onto a mat board on which double sided tape was adhered beforehand, and the fiber length was measured with a caliper to an accuracy of 1 mm. To obtain the frequency distribution, fibers were divided into groups of fiber length of less than 45 mm, not less than 45 mm and less than 65 mm, not less than 65 mm and less than 85 mm, and not less than 85 mm. The number of fibers in each group was counted, and the ratio of each fiber length group was calculated by the following equation.

$$\text{Natural fibers (such as kenaf fibers) of fiber length of less than 45 mm (\%)} = (\text{numbers of natural fibers, such as kenaf fibers of fiber length of less than 45 mm}/100) \times 100$$

$$\text{Natural fibers (such as kenaf fibers) of fiber length of not less than 45 mm and less than 65 mm (\%)} = (\text{numbers of natural fibers, such as kenaf fibers of fiber length of not less than 45 mm and less than 65 mm}/100) \times 100$$

$$\text{Natural fibers (such as kenaf fibers) of fiber length of not less than 65 mm and less than}$$

$$\text{85 mm (\%) = (numbers of natural fibers, such as kenaf fibers of fiber length of not less}$$

$$\text{than 65 mm and less than 85 mm/100)} \times 100$$

$$\text{Natural fibers (such as kenaf fibers) of fiber length of not less than 85 mm (\%) =}$$

$$\text{(numbers of natural fibers, such as kenaf fibers of fiber length of not less than 85}$$

$$\text{mm/100)} \times 100$$

$$\text{Natural fibers (such as kenaf fibers) of fiber length of not less than 45 mm (\%) = (100 -}$$

$$\text{ratio of natural fibers, such as kenaf fibers of fiber length of less than 45 mm (\%))}$$

C. Weight per unit area

The weight per unit area was measured according to JIS L 1906 (2000) 5.2. Three test pieces of 200 mm x 250 mm were taken from different sites of the sample, left under standard conditions (temperature: 20°C, relative humidity: 65%) for 24 hours, and measured for the mass (g). The arithmetic mean was expressed in the mass per square meter (g/m$^2$) and regarded as the weight per unit area.

D. Thickness

Three test pieces of 200 mm x 250 mm were taken from different sites of the sample, left under standard conditions (temperature: 20°C, relative humidity: 65%) for 24 hours, and measured for the thickness to an accuracy of 0.01 mm at five points, that is, at the center and four corners of each test piece with use of a measuring instrument (TECLOCK type SM-123). The arithmetic mean was regarded as the thickness.

E. Air permeability

The air permeability was measured according to JIS L 1096 (1999) 8.27.1 Method A (Frazier method). Five test pieces of 200 mm x 250 mm were taken from different sites of the sample, and the test piece was attached to one end (inlet) of the cylinder of the Frazier tester. When attached, the test piece was placed on the cylinder, and a load of about 98 N (10 kgf) was uniformly applied so as to prevent air leakage at the part for holding the test piece and not to block the inlet portion. After the test piece was attached, the suction fan was adjusted with use of a rheostat so that the inclined barometer indicated 125 Pa. Based on the pressure indicated on the vertical barometer and the type of the air hole used, the amount of air that permeated the test piece was obtained with use of the accompanying conversion table. The arithmetic mean of the five test pieces was regarded as the air permeability.

F. Tensile strength and tensile elongation

Test pieces of 50 mm x 200 mm were taken from the nonwoven fabric (five pieces were taken in the machine direction (MD pieces) and five other pieces were taken in the transverse direction (TD pieces)). Each test piece was left under standard conditions (temperature: 20°C, relative humidity: 65%) for 48 hours and then attached to the grips of a tensile tester, where the distance between the grips was 100 mm. Load was applied at a tension speed of 100 mm/min until the test piece was broken off, and the strength under the maximum load was measured. By the following equation, the arithmetic means were separately calculated for five MD pieces and five TD pieces.

$$\text{Tensile strength (N/cm}^2\text{) = [tensile strength under maximum load (N)]/[5 (cm)} \times$$

$$\text{thickness (cm)]}$$

$$\text{Tensile elongation (\%)} = [\text{elongation under maximum load (mm)}]/[\text{distance between grips 100 (mm)}]$$

G. Tensile-stress at 30% tensile elongation in a 200°C atmosphere

Test pieces of 50 mm x 200 mm were taken from the nonwoven fabric (five pieces were taken in the machine direction and five other pieces were taken in the transverse direction). A heating furnace was attached to a tensile tester. While kept in a 200°C atmosphere with use of the heating furnace, the test piece was attached to the grips of the tensile tester, where the distance between the grips was 100 mm. After having been left for 1 minute, load was applied at a tension speed of 100 mm/min until the test piece was broken off, and the strength under the maximum load was measured to determine the tensile strength at 30% tensile elongation. The tensile stress was calculated by the equation given below.

$$\text{Tensile stress at 30\% tensile elongation in a } 200^{\circ}\text{C atmosphere (N/cm}^2) = [\text{tensile strength at 30\% tensile elongation (N)}]/[5 \text{ (cm)} \times \text{thickness (cm)}]$$

H. Amount of odor

Two test pieces each in an amount of 22 g were taken from the nonwoven fabric. The test pieces were measured for odors according to the method for measuring the amount of odors of (2) Natural fibers, such as kenaf fibers described above (see paragraph 0081) in Examples.

(4) Molded product

A. Weight per unit area

Assuming that the weight per unit area is the same as that of the nonwoven fabric, the weight per unit area was calculated by the following equation.

$$\text{Weight per unit area (g/m}^2) \text{ of molded product} = \text{weight per unit area (g/m}^2) \text{ of nonwoven fabric}$$

B. Thickness

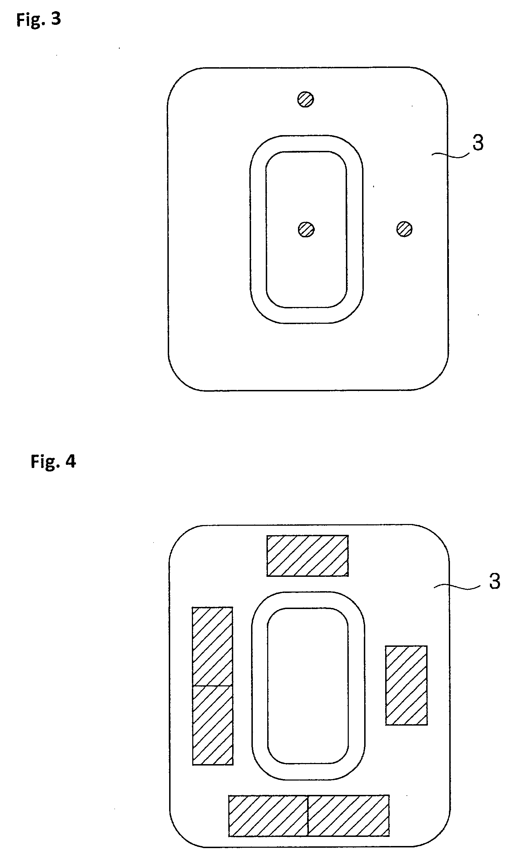

The molded product was left under standard conditions (temperature: 20°C, relative humidity: 65%) for 24 hours, and measured for the thickness to an accuracy of 0.1 mm at three points shown in Fig. 3 (see hatched circles in Fig. 3) with use of a measuring instrument (PEACOCK type LA-2). The mean value of the three points was regarded as the thickness.

C. Density

The density was measured according to JIS A 5905 (2003) 6.3. Test pieces of 50 mm in width and 150 mm in length were taken from the sites of the molded product 3 as shown in Fig. 4 (see hatched rectangles in Fig. 4) (three pieces were taken in the machine direction (from the vertically long hatched rectangles) and three other pieces were taken in the transverse direction (from the horizontally long hatched rectangles)). Each test piece was left under standard conditions (temperature: 20°C, relative humidity: 65%) for 24 hours and then measured for the width, length, and thickness. For vertical rectangles and horizontal rectangles, the mean width, length, and thickness of the three pieces were separately calculated to determine the volume (v). Then the mass (g) was measured, and the density was calculated by the following equation. The thickness, width, and length were measured to an accuracy of 0.1 mm and the mass was measured to an accuracy of 0.01 g, and the density was calculated to an accuracy of 0.01 g/cm$^3$ by the following equation. The density was calculated for each piece, and then the mean of the three pieces was calculated. The mean value was regarded as the density.

$$\text{Density (g/cm}^3) = m/v$$

In this equation, m is mass (g) and v is volume (cm$^3$).

D. Moldability

Moldability was evaluated based on the appearance of the raised portion of a molded product prepared by the following molding method.

a. Molding method

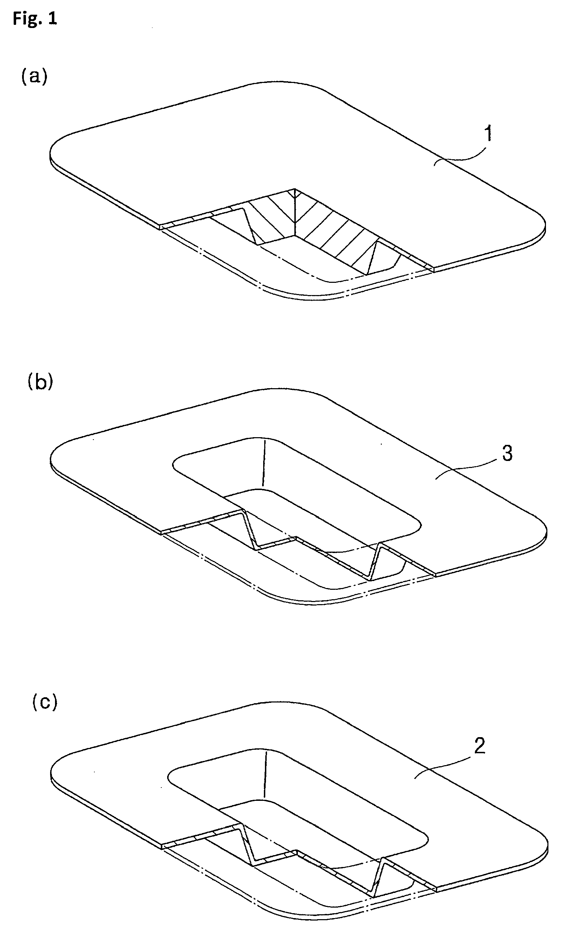

A nonwoven fabric having a desired density was heated with use of a far infrared heater until the internal temperature reached 200°C. Then, with use of the male mold 1 shown in Fig. 1 (a) and the female mold 2 shown in Fig. 1 (c) set at 30°C, cold press at 3,000 kN/m$^2$ for 8 seconds was performed to form the molded product 3 shown in Fig. 1 (b) having a thickness of 5 mm or less.

b. Wrinkle at corner of raised portion of molded product

The wrinkle at a corner of a raised portion of the molded product was evaluated as follows.

A: No wrinkle at corner of raised portion of molded product (excellent)
B: Wrinkle with height of less than 0.5 mm at corner of raised portion of molded product (good)
C: Wrinkle with height of 0.5 mm or more at corner of raised portion of molded product (poor)

c. See-through defects and cracks on raised portion of molded product

The see-through defects and cracks on a raised portion of the molded product were evaluated as follows.

A: No see-through defect or crack at raised portion of molded product (excellent)
B: No crack but see-through defect at raised portion of molded product (good)
C: Crack at raised portion of molded product (poor)

E. Bending strength

The bending strength was measured according to JIS A 5905 (2003) 6.6. Test pieces of 50 mm in width and 150 mm in length were taken from the sites of the molded product 3 as shown in Fig. 4 (see hatched rectangles in Fig. 4) (three pieces were taken in the machine direction (from the vertically long hatched rectangles) and three other pieces were taken in the transverse direction (from the horizontally long hatched rectangles)). Each test piece was left under standard conditions (temperature: 20°C, relative humidity: 65%) for 48 hours. The test piece was set in a bending strength tester, where the span (L) was set at 100 mm. Load was applied at a speed of 50 mm/min to the surface of the test piece at the intermediate position of the span. The maximum load was measured to determine the bending strength by the following equation. The mean of three test pieces was regarded as the bending strength.

$$\text{Bending strength (N/mm}^2) = [3 \times \text{maximum load (N)} \times L \text{ (mm)}]/[2 \times \text{width (mm)} \times \text{thickness}^2 \text{ (mm)}]$$

Evaluation

A: Bending strength is 20 N/mm$^2$ or more (in both machine and cross directions) (excellent)
B: Bending strength is 10 N/mm$^2$ or more (in both machine and cross directions) (good)
C: Bending strength is less than 10 N/mm$^2$ (in both machine and cross directions) (poor)

F. Odor sensory test

Five test pieces of 50 mm in width and 100 mm in length were taken from the molded product. Each test piece was separately put into a 2-L glass bottle, and covered with a lid. The glass bottles were put into a dryer (90°C) and heated for 1 hour. Then, the bottles were taken out of the dryer and cooled to the room temperature. The tester brought their nose close to the entrance of the glass bottle, opened the lid, and sniffed to evaluate the odor in accordance with the following criteria. The odor sensory test was conducted by 5 testers, and each tester sniffed five test pieces. The average of 25 evaluations by the 5 testers was determined.

1. Odorless
2. Odor but not unpleasant
3. Obvious odor but not unpleasant
4. Unpleasant odor
5. Strong unpleasant odor

Example 1

Polylactic acid chips (melting point: 170°C, weight average molecular weight: $11.3 \times 10^4$), 1% by mass of carbon black as a crystal nucleating agent having a median diameter d50 of 20 nm, and 2% by mass of triglycidyl isocyanurate as a hydrolysis suppressor ("TEPIC" (registered trademark, hereinafter the same) by Nissan Chemical Industries, Ltd.) were placed in a spinning machine hopper, and melt spinning at a spinning temperature of 230°C was performed with the use of an extruder spinning machine. The spun yarn was cooled, provided with an oil, gathered, and this spun line of yarns was made to cool, and taken up at 1,000 m/min to give an unstretched yarn.

The obtained unstretched yarns were gathered into a 800, 000 dtex bundle, stretched by 4.0-fold in a liquid bath at 90°C, subjected to machine crimping with use of a stuffer-box crimper, heated at 145°C for 10 minutes, provided with an oil by spraying so that the amount of the oil adhered to the yarns would be 0.5% by weight relative to that of the yarns, and cut into 51-mm pieces to give polylactic acid short fibers of which single fiber fineness was 6.6 dtex. Thus, it was possible to stably obtain raw stock without breakage or fluff during the steps of spinning and stretching. The obtained polylactic acid short fibers had a tensile strength of 2.1 cN/dtex, a tensile elongation of 72%, a number of crimps of 10.2 crimps/25 mm, a percentage of crimp of 14%, and a dry-heat shrinkage of 1.2%, which were practically sufficient mechanical properties. In addition, the crystallization temperature on cooling of 127°C meant rapid crystallization, and the residual epoxy value was 0.18 Eq/kg.

Kenaf fibers were prepared by retting kenaf stalks in a river to harvest bast fibers and subsequently cutting them with use of a guillotine cutter. The obtained kenaf fibers had a fiber length of 119 mm, a fiber diameter of 58 $\mu$m, a number of duct-derived pores of 41, and a moisture content of 17% by mass and a tensile strength of 2.0 cN/dtex. The odors detected from the kenaf fibers were 0.3 $\mu$g/kg of 1-methoxy-2-propyl acetate, 0.9 $\mu$g/kg of 2-methoxyethyl acetate, 0.3 $\mu$g/kg of acetic acid, 1.1 $\mu$g/kg of trimethyl benzene and 4.2 $\mu$g/kg of acetaldehyde. Formaldehyde was not detected.

The polylactic acid short fibers and the kenaf fibers were blended at a mass ratio of 30:70 with use of a roller card, and then opened to give a web. Then, needle-punching for intertwining the fibers was performed at a needle density of 60 needles/cm$^2$ to give a nonwoven fabric of which the weight per unit area was 529 g/m$^2$ and the thickness was 3.4 mm. The nonwoven fabric had a tensile strength in the machine direction (MD tensile strength) of 98 N/cm$^2$ and a tensile strength in the transverse direction (TD tensile strength) of 56 N/cm$^2$, and also had a tensile stress in the machine direction (MD tensile stress) of 14 N/cm$^2$ and a tensile stress in the transverse direction (TD tensile stress) of 10 N/cm$^2$ at 30% tensile elongation in a 200°C atmosphere. The crystallization temperature on cooling of the polylactic acid fibers in the nonwoven fabric was 127°C, which meant rapid crystallization. The percentage of the kenaf fibers having a fiber length of 45 mm or longer was 86% in fiber length frequency distribution, which means highly strong intertwining between the polylactic acid fibers and the kenaf fibers in the nonwoven fabric. The odors detected from the nonwoven fabric were 0.3 $\mu$g/kg of 1-methoxy-2-propyl acetate, 0.9 $\mu$g/kg of 2-methoxyethyl acetate, 2.7 $\mu$g/kg of acetic acid, 1.8 $\mu$g/kg of trimethyl benzene and 5.2 $\mu$g/kg of acetaldehyde. Formaldehyde was not detected.

Next, a single piece of the nonwoven fabric which was adjusted to have a desired density shown in Table 1 was heated with use of a far infrared heater until the internal temperature reached 200°C. Then, with use of the mold (see Fig. 1 (a) and Fig. 1 (c)) set at 30°C, cold press at 3, 000 kN/m$^2$ for 8 seconds was performed to form a molded product having a density of 0.76 g/cm$^3$ and a thickness of 0.7 mm. The molded product did not have any see-through defect or crack on the raised portion, or wrinkle at the corners. Although the cold press time with use of the mold was as short as 8 seconds, the bending strength in the machine direction (MD bending strength) was 25 N/mm$^2$ and the bending strength in the transverse direction (TD bending strength) was 27 N/mm$^2$, both of which were sufficiently high. The evaluation result in the odor sensory test was 2, i.e., there was odor but not unpleasant.

Example 2

The same polylactic acid short fibers and kenaf fibers as in Example 1 were blended at a mass ratio of 50:50 with use of a roller card, and then opened to give a web. Then, needle-punching for intertwining the fibers was performed at a needle density of 60 needles/$cm^2$ to give a nonwoven fabric of which the weight per unit area was 556 g/$m^2$ and the thickness was 3.6 mm. The nonwoven fabric had a MD tensile strength of 128 N/$cm^2$ and a TD tensile strength of 84 N/$cm^2$, and also had a MD tensile stress of 19 N/$cm^2$ and a TD tensile stress of 16 N/$cm^2$ at 30% tensile elongation in a 200°C atmosphere. The crystallization temperature on cooling of the polylactic acid fibers in the nonwoven fabric was 127°C. The percentage of the kenaf fibers having a fiber length of 45 mm or longer was 87% in fiber length frequency distribution, which means highly strong intertwining between the polylactic acid fibers and the kenaf fibers in the nonwoven fabric. The odors detected from the nonwoven fabric were 0.3 $\mu$g/kg of 1-methoxy-2-propyl acetate, 0.9 $\mu$g/kg of 2-methoxyethyl acetate, 2.4 $\mu$g/kg of acetic acid, 1.5 $\mu$g/kg of trimethyl benzene and 4.1 $\mu$g/kg of acetaldehyde. Formaldehyde was not detected.

Then, under the same molding conditions as in Example 1, a molded product having a density of 0.70 g/$cm^3$ and a thickness of 0.8 mm was formed. The molded product was rapidly formed and did not have any see-through defect or crack on the raised portion, or wrinkle at the corners. Although the cold press time with use of the mold was as short as 8 seconds, the bending strength in the machine direction was 24 N/$mm^2$ and the bending strength in the transverse direction was 22 N/$mm^2$, both of which were sufficiently high. The evaluation result in the odor sensory test was 2, i.e., there was odor but not unpleasant.

Example 3

The same polylactic acid short fibers and kenaf fibers as in Example 1 were blended at a mass ratio of 30:70 with use of a roller card, and then opened to give a web. Then, needle-punching for intertwining the fibers was performed at a needle density of 160 needles/$cm^2$ in total, i.e., 80 needles/$cm^2$ for the first punching and 80 needles/$cm^2$ for the second punching to give a nonwoven fabric of which the weight per unit area was 514 g/$m^2$ and the thickness was 3.4 mm. The nonwoven fabric had a MD tensile strength of 58 N/$cm^2$ and a TD tensile strength of 34 N/$cm^2$, and also had a MD tensile stress of 9 N/$cm^2$ and a TD tensile stress of 8 N/$cm^2$ at 30% tensile elongation in a 200°C atmosphere. The crystallization temperature on cooling of the polylactic acid fibers in the nonwoven fabric was 127°C. The percentage of the kenaf fibers having a fiber length of 45 mm or longer was 57% in fiber length frequency distribution, which means highly strong intertwining between the polylactic acid fibers and the kenaf fibers in the nonwoven fabric.

Then, under the same molding conditions as in Example 1, a molded product having a density of 0.73 g/$cm^3$ and a thickness of 0.7 mm was formed. The molded product was rapidly formed and did not have any crack but had see-through defects on the raised portion. There was no wrinkle at the corners. Although the cold press time with use of the mold was as short as 8 seconds, the MD bending strength was 17 N/$mm^2$ and the TD bending strength was 15 N/$mm^2$, both of which were sufficiently high.

Example 4

The same polylactic acid short fibers and kenaf fibers as in Example 1 were processed under the same conditions as in Example 1 to give a nonwoven fabric of which the weight per unit area was 1,012 g/$m^2$ and the thickness was 6.1 mm. The nonwoven fabric had a MD tensile strength of 131 N/$cm^2$ and a TD tensile strength of 107 N/$cm^2$, and also had a MD tensile stress of 32 N/$cm^2$ and a TD tensile stress of 21 N/$cm^2$ at 30% tensile elongation in a 200°C atmosphere. The crystallization temperature on cooling of the polylactic acid fibers in the nonwoven fabric was 127°C.

The percentage of the kenaf fibers having a fiber length of 45 mm or longer was 91% in fiber length frequency distribution, which means highly strong intertwining between the polylactic acid fibers and the kenaf fibers in the nonwoven fabric. Then, under the same molding conditions as in Example 1, a molded product having a density of 0.72 g/$cm^3$ and a thickness of 1.4 mm was formed. The molded product was rapidly formed and did not have any see-through defect or crack on the raised portion, or wrinkle at the corners. Although the cold press time with use of the mold was as short as 8 seconds, the MD bending strength was 20 N/$mm^2$ and the TD bending strength was 23 N/$mm^2$, both of which were sufficiently high.

Example 5

The same polylactic acid short fibers and kenaf fibers as in Example 1 were processed under the same conditions as in Example 1 to give a nonwoven fabric of which the weight per unit area was 1,584 g/$m^2$ and the thickness was 8.2 mm. The nonwoven fabric had a MD tensile strength of 157 N/$cm^2$ and a TD tensile strength of 110 N/$cm^2$, and also had a MD tensile stress of 56 N/$cm^2$ and a TD tensile stress of 17 N/$cm^2$ at 30% tensile elongation in a 200°C atmosphere.

The crystallization temperature on cooling of the polylactic acid fibers in the nonwoven fabric was 127°C. The percentage of the kenaf fibers having a fiber length of 45 mm or longer was 94% in fiber length frequency distribution, which means highly strong intertwining between the polylactic acid fibers and the kenaf fibers in the nonwoven fabric. The odors detected from the nonwoven fabric were 0.3 μg/kg of 1-methoxy-2-propyl acetate, 0.9 μg/kg of 2-methoxyethyl acetate, 2.9 μg/kg of acetic acid, 1.8 μg/kg of trimethyl benzene and 5.1 μg/kg of acetaldehyde. Formaldehyde was not detected.

Then, under the same molding conditions as in Example 1, a molded product having a density of 0.75 g/cm$^3$ and a thickness of 2.1 mm was formed. The molded product was rapidly formed and did not have any see-through defect or crack on the raised portion, or wrinkle at the corners. Although the cold press time with use of the mold was as short as 8 seconds, the MD bending strength was 27 N/mm$^2$ and the TD bending strength was 29 N/mm$^2$, both of which were sufficiently high. The evaluation result in the odor sensory test was 3, i.e., there was obvious odor but not unpleasant.

Example 6

The same polylactic acid short fibers and kenaf fibers as in Example 1 were blended at a mass ratio of 50:50 with use of a roller card, and then opened to give a web. Then, needle-punching for intertwining the fibers was performed at a needle density of 60 needles/cm$^2$ to give a nonwoven fabric of which the weight per unit area was 1, 615 g/m$^2$ and the thickness was 8.2 mm. The nonwoven fabric had a MD tensile strength of 175 N/cm$^2$ and a TD tensile strength of 107 N/cm$^2$, and also had a MD tensile stress of 44 N/cm$^2$ and a TD tensile stress of 15 N/cm$^2$ at 30% tensile elongation in a 200°C atmosphere. The crystallization temperature on cooling of the polylactic acid fibers in the nonwoven fabric was 127°C. The percentage of the kenaf fibers having a fiber length of 45 mm or longer was 92% in fiber length frequency distribution, which means highly strong intertwining between the polylactic acid fibers and the kenaf fibers in the nonwoven fabric. The odors detected from the nonwoven fabric were 0.3 μg/kg of 1-methoxy-2-propyl acetate, 0.9 μg/kg of 2-methoxyethyl acetate, 2.2 μg/kg of acetic acid, 1.5 μg/kg of trimethyl benzene and 3.9 μg/kg of acetaldehyde. Formaldehyde was not detected.

Then, under the same molding conditions as in Example 1, a molded product having a density of 0. 73 g/cm$^3$ and a thickness of 2.2 mm was formed. The molded product was rapidly formed and did not have any see-through defect or crack on the raised portion, or wrinkle at the corners. Although the cold press time with use of the mold was as short as 8 seconds, the MD bending strength was 26 N/mm$^2$ and the TD bending strength was 27 N/mm$^2$, both of which were sufficiently high. The evaluation result in the odor sensory test was 3, i.e., there was obvious odor but not unpleasant.

Example 7

Kenaf fibers were prepared by retting kenaf stalks in a river to harvest bast fibers and subsequently cutting them with use of a guillotine cutter. Then, the kenaf fibers were processed with a 10% aqueous solution of sodium hydroxide at 100°C for 20 minutes. The obtained kenaf fibers had a fiber length of 142 mm, a fiber diameter of 40 μm, a number of duct-derived pores of 28, and a moisture content of 16% by mass and a tensile strength of 1. 5 cN/dtex. The odors detected from the kenaf fibers were 0.1 μg/kg of 1-methoxy-2-propyl acetate, 0.4 μg/kg of 2-methoxyethyl acetate, 0.2 μg/kg of acetic acid, 0.9 μg/kg of trimethyl benzene and 1.8 μg/kg of acetaldehyde. Formaldehyde was not detected.

The same polylactic acid short fibers as in Example 1 and the above kenaf fibers were processed under the same conditions as in Example 1 to give a nonwoven fabric of which the weight per unit area was 1,571 g/m$^2$ and the thickness was 10.4 mm. The nonwoven fabric had a MD tensile strength of 61 N/cm$^2$ and a TD tensile strength of 33 N/cm$^2$, and also had a MD tensile stress of 10 N/cm$^2$ and a TD tensile stress of 5 N/cm$^2$ at 30% tensile elongation in a 200°C atmosphere. The crystallization temperature on cooling of the polylactic acid fibers in the nonwoven fabric was 127°C. The percentage of the kenaf fibers having a fiber length of 45 mm or longer was 68% in fiber length frequency distribution, which means highly strong intertwining between the polylactic acid fibers and the kenaf fibers in the nonwoven fabric. The odors detected from the nonwoven fabric were 0.2 μg/kg of 1-methoxy-2-propyl acetate, 0.4 μg/kg of 2-methoxyethyl acetate, 1.5 μg/kg of acetic acid, 1.1 μg/kg of trimethyl benzene and 2.4 μg/kg of acetaldehyde. Formaldehyde was not detected.

Then, under the same molding conditions as in Example 1, a molded product having a density of 0.71 g/cm$^3$ and a thickness of 2.2 mm was formed. The molded product was rapidly formed and did not have any see-through defect or crack on the raised portion, or wrinkle at the corners. Although the cold press time with use of the mold was as short as 8 seconds, the MD bending strength was 23 N/mm$^2$ and the TD bending strength was 19 N/mm$^2$, both of which were sufficiently high. The evaluation result in the odor sensory test was 1, i.e., odorless.

Example 8

The same polylactic acid short fibers and kenaf fibers as in Example 1 were processed under the same conditions as in Example 1 to give a nonwoven fabric of which the weight per unit area was 1, 982 g/m$^2$ and the thickness was 13.1 mm. The nonwoven fabric had a MD tensile strength of 193 N/cm$^2$ and a TD tensile strength of 157 N/cm$^2$, and also had a MD tensile stress of 63 N/cm$^2$ and a TD tensile stress of 27 N/cm$^2$ at 30% tensile elongation in a 200°C atmosphere. The crystallization temperature on cooling of the polylactic acid fibers in the nonwoven fabric was 127°C.

The percentage of the kenaf fibers having a fiber length of 45 mm or longer was 95% in fiber length frequency distribution, which means highly strong intertwining between the polylactic acid fibers and the kenaf fibers in the nonwoven fabric. Then, under the same molding conditions as in Example 1, a molded product having a density of 0.73 g/cm$^3$ and a thickness of 2.7 mm was formed. The molded product was rapidly formed and did not have any see-through defect or crack on the raised portion, or wrinkle at the corners. Although the cold press time with use of the mold was as short as 8 seconds, the MD bending strength was 25 N/mm$^2$ and the TD bending strength was 26 N/mm$^2$, both of which were sufficiently high.

Example 9

The same polylactic acid short fibers and kenaf fibers as in Example 1 were blended at a weight ratio of 30:70 with use of a roller card, and then opened to give a web. Then, needle-punching for intertwining the fibers was performed at a needle density of 100 needles/cm$^2$ in total, i.e., 50 needles/cm$^2$ for the first punching and 50 needles/cm$^2$ for the second punching to give a nonwoven fabric of which the weight per unit area was 2, 538 g/m$^2$ and the thickness was 13.8 mm. The nonwoven fabric had a MD tensile strength of 281 N/cm$^2$ and a TD tensile strength of 237 N/cm$^2$, and also had a MD tensile stress of 78 N/cm$^2$ and a TD tensile stress of 53 N/cm$^2$ at 30% tensile elongation in a 200°C atmosphere. The air permeability was as low as 26 cc/cm$^2$·sec. The percentage of the kenaf fibers having a fiber length of 45 mm or longer was 96% in fiber length frequency distribution, which means highly strong intertwining between the polylactic acid fibers and the kenaf fibers in the nonwoven fabric. The crystallization temperature on cooling of the polylactic acid fibers in the nonwoven fabric was 127°C.

Then, under the same molding conditions as in Example 1, a molded product having a density of 1.21 g/cm$^3$ and a thickness of 2.1 mm was formed. The molded product was rapidly formed and did not have any see-through defect or crack on the raised portion, but had a small wrinkle with a height of less than 0.5 mm at a corner. Although the cold press time with use of the mold was as short as 8 seconds, the MD bending strength was 55 N/mm$^2$ and the TD bending strength was 48 N/mm$^2$, both of which were sufficiently high.

Example 10

Kenaf fibers were prepared by retting kenaf stalks in a swamp to harvest bast fibers and subsequently cutting them with use of a guillotine cutter. The obtained kenaf fibers had a fiber length of 184 mm, a fiber diameter of 93 $\mu$m, a number of duct-derived pores of 30, and a moisture content of 13% by mass and a tensile strength of 0.9 cN/dtex. The odors detected from the kenaf fibers were 0.4 $\mu$g/kg of 1-methoxy-2-propyl acetate, 1.8 $\mu$g/kg of 2-methoxyethyl acetate, 3.7 $\mu$g/kg of acetic acid, 2.2 $\mu$g/kg of trimethyl benzene and 5.8 $\mu$g/kg of acetaldehyde. Formaldehyde was not detected.

The same polylactic acid short fibers as in Example 1 and the above kenaf fibers were processed under the same conditions as in Example 1 to give a nonwoven fabric of which the weight per unit area was 530 g/m$^2$ and the thickness was 3.0 mm. The nonwoven fabric had a MD tensile strength of 81 N/cm$^2$ and a TD tensile strength of 35 N/cm$^2$, and also had a MD tensile stress of 12 N/cm$^2$ and a TD tensile stress of 7 N/cm$^2$ at 30% tensile elongation in a 200°C atmosphere. The crystallization temperature on cooling of the polylactic acid fibers in the nonwoven fabric was 127°C.

The percentage of the kenaf fibers having a fiber length of 45 mm or longer was 52% in fiber length frequency distribution, which means strong intertwining between the polylactic acid fibers and the kenaf fibers in the nonwoven fabric. The odors detected from the nonwoven fabric were 0.5 $\mu$g/kg of 1-methoxy-2-propyl acetate, 2.1 $\mu$g/kg of 2-methoxyethyl acetate, 4.9 $\mu$g/kg of acetic acid, 2.7 $\mu$g/kg of trimethyl benzene and 6.8 $\mu$g/kg of acetaldehyde. Formaldehyde was not detected.

Then, under the same molding conditions as in Example 1, a molded product having a density of 0.76 g/cm$^3$ and a thickness of 0.7 mm was formed. The molded product was rapidly formed and did not have any crack but had see-through defects on the raised portion. There was no wrinkle at the corners. Although the cold press time with use of the mold was as short as 8 seconds, the MD bending strength was 28 N/mm$^2$ and the TD bending strength was 26 N/mm$^2$, both of which were sufficiently high. The evaluation result in the odor sensory test was 4, i.e., unpleasant odor.

Example 11

Polylactic acid chips (melting point: 170°C, weight average molecular weight: 10.8 $\times$ 10$^4$), 1% by mass of carbon black as a crystal nucleating agent having a median diameter d50 of 20 nm, and 2% by mass of triglycidyl isocyanurate as a hydrolysis suppressor ("TEPID" by Nissan Chemical Industries, Ltd.) were placed in a spinning machine hopper, and melt spinning at a spinning temperature of 230°C was performed with the use of an extruder spinning machine. The spun yarn was cooled, provided with an oil, gathered, and this spun line of yarns was made to cool, and taken up at 1,000 m/min to give an unstretched yarn.

The obtained unstretched yarns were gathered into a 800, 000 dtex bundle, stretched by 4.0-fold in a liquid bath at 90°C, subjected to machine crimping with use of a stuffer-box crimper, heated at 90°C for 10 minutes, provided with an oil by spraying so that the amount of the oil adhered to the yarns would be 0.5% by weight relative to that of the yarns, and cut into 51-mm pieces to give polylactic acid short fibers of which single fiber fineness was 6.6 dtex. Thus, it was possible to stably obtain raw stock without breakage or fluff during the steps of spinning and stretching. The obtained polylactic acid short fibers had a tensile strength of 2. 3 cN/dtex, a tensile elongation of 56%, a number of crimps of 10.8 crimps/25 mm, a percentage of crimp of 12%, and a dry-heat shrinkage of 7.5%, which were practically sufficient mechanical properties. In addition, the crystallization temperature on cooling of 127°C meant rapid crystallization.

The above polylactic acid short fibers and the same kenaf fibers as in Example 1 were processed under the same conditions as in Example 1 to give a nonwoven fabric of which the weight per unit area was 1, 534 g/m$^2$ and the thickness was 8.1 mm. The nonwoven fabric had a MD tensile strength of 166 N/cm$^2$ and a TD tensile strength of 114 N/cm$^2$, and also had a MD tensile stress of 59 N/cm$^2$ and a TD tensile stress of 23 N/cm$^2$ at 30% tensile elongation in a 200°C atmosphere. The crystallization temperature on cooling of the polylactic acid fibers in the nonwoven fabric was 127°C. The percentage of the kenaf fibers having a fiber length of 45 mm or longer was 92% in fiber length frequency distribution, which means highly strong intertwining between the polylactic acid fibers and the kenaf fibers in the nonwoven fabric.

Then, under the same molding conditions as in Example 1, a molded product having a density of 0.73 g/cm$^3$ and a thickness of 2.1 mm was formed. The molded product was rapidly formed and did not have any see-through defect or crack on the raised portion, but had a small wrinkle with a height of less than 0.5 mm at a corner. Although the cold press time with use of the mold was as short as 8 seconds, the MD bending strength was 22 N/mm$^2$ and the TD bending strength was 23 N/mm$^2$, both of which were sufficiently high.

Example 12

Polylactic acid chips (melting point: 170°C, weight average molecular weight: $11.3 \times 10^4$), 1% by mass of carbon black as a crystal nucleating agent having a median diameter d50 of 20 nm, and 0.5% by mass of triglycidyl isocyanurate as a hydrolysis suppressor ("TEPIC" by Nissan Chemical Industries, Ltd.) were placed in a spinning machine hopper, and melt spinning at a spinning temperature of 230°C was performed with the use of an extruder spinning machine. The spun yarn was cooled, provided with an oil, gathered, and this spun line of yarns was made to cool, and taken up at 1,000 m/min to give an unstretched yarn.

The obtained unstretched yarns were gathered into a 800, 000 dtex bundle, stretched by 4.0-fold in a liquid bath at 90°C, subjected to machine crimping with use of a stuffer-box crimper, heated at 145°C for 10 minutes, provided with an oil by spraying so that the amount of the oil adhered to the yarns would be 0.5% by weight relative to that of the yarns, and cut into 51-mm pieces to give polylactic acid short fibers of which single fiber fineness was 6.6 dtex. Thus, it was possible to stably obtain raw stock without breakage or fluff during the steps of spinning and stretching. The obtained polylactic acid short fibers had a tensile strength of 2.2 cN/dtex, a tensile elongation of 71%, a number of crimps of 10.5 crimps/25 mm, a percentage of crimp of 13%, and a dry-heat shrinkage of 1.4%, which were practically sufficient mechanical properties. In addition, the crystallization temperature on cooling of 127°C meant rapid crystallization, and the residual epoxy value was 0.04 Eq/kg.

The above polylactic acid short fibers and the same kenaf fibers as in Example 1 were processed under the same conditions as in Example 1 to give a nonwoven fabric of which the weight per unit area was 516 g/m$^2$ and the thickness was 3.5 mm. The nonwoven fabric had a MD tensile strength of 74 N/cm$^2$ and a TD tensile strength of 44 N/cm$^2$, and also had a MD tensile stress of 10 N/cm$^2$ and a TD tensile stress of 8 N/cm$^2$ at 30% tensile elongation in a 200°C atmosphere. The crystallization temperature on cooling of the polylactic acid fibers in the nonwoven fabric was 127°C. The percentage of the kenaf fibers having a fiber length of 45 mm or longer was 89% in fiber length frequency distribution, which means highly strong intertwining between the polylactic acid fibers and the kenaf fibers in the nonwoven fabric.

Then, under the same molding conditions as in Example 1, a molded product having a density of 0.74 g/cm$^3$ and a thickness of 0.7 mm was formed. The molded product was rapidly formed and did not have any crack but had see-through defects on the raised portion. There was no wrinkle at the corners. Although the cold press time with use of the mold was as short as 8 seconds, the MD bending strength was 18 N/mm$^2$ and the TD bending strength was 13 N/mm$^2$.

Example 13

Polylactic acid chips (melting point: 170°C, weight average molecular weight: 11.3 × 10$^4$), 1% by mass of carbon black as a crystal nucleating agent having a median diameter d50 of 10 nm, and 2% by mass of triglycidyl isocyanurate as a hydrolysis suppressor ("TEPIC" by Nissan Chemical Industries, Ltd.) were placed in a spinning machine hopper, and melt spinning at a spinning temperature of 230°C was performed with the use of an extruder spinning machine. The spun yarn was cooled, provided with an oil, gathered, and this spun line of yarns was made to cool, and taken up at 1,000 m/min to give an unstretched yarn.

The obtained unstretched yarns were gathered into a 800, 000 dtex bundle, stretched by 4.0-fold in a liquid bath at 90°C, subjected to machine crimping with use of a stuffer-box crimper, heated at 145°C for 10 minutes, provided with an oil by spraying so that the amount of the oil adhered to the yarns would be 0.5% by weight relative to that of the yarns, and cut into 51-mm pieces to give polylactic acid short fibers of which single fiber fineness was 6.6 dtex. Thus, it was possible to stably obtain raw stock without breakage or fluff during the steps of spinning and stretching. The obtained polylactic acid short fibers had a tensile strength of 2.0 cN/dtex, a tensile elongation of 70%, a number of crimps of 10.9 crimps/25 mm, a percentage of crimp of 13%, and a dry-heat shrinkage of 1.1%, which were practically sufficient mechanical properties. In addition, the crystallization temperature on cooling of 138°C meant rapid crystallization, and the residual epoxy value was 0.18 Eq/kg.

The above polylactic acid short fibers and the same kenaf fibers as in Example 1 were processed under the same conditions as in Example 1 to give a nonwoven fabric of which the weight per unit area was 1, 534 g/m$^2$ and the thickness was 8.1 mm. The nonwoven fabric had a MD tensile strength of 154 N/cm$^2$ and a TD tensile strength of 108 N/cm$^2$, and also had a MD tensile stress of 51 N/cm$^2$ and a TD tensile stress of 18 N/cm$^2$ at 30% tensile elongation in a 200°C atmosphere. The crystallization temperature on cooling of the polylactic acid fibers in the nonwoven fabric was 138°C, which means rapid crystallization.

The percentage of the kenaf fibers having a fiber length of 45 mm or longer was 95% in fiber length frequency distribution, which means highly strong intertwining between the polylactic acid fibers and the kenaf fibers in the nonwoven fabric. The odors detected from the nonwoven fabric were 0.3 μg/kg of 1-methoxy-2-propyl acetate, 0.9 μg/kg of 2-methoxyethyl acetate, 2.5 μg/kg of acetic acid, 1.4 μg/kg of trimethyl benzene and 4.0 μg/kg of acetaldehyde. Formaldehyde was not detected.

Next, a single piece of the nonwoven fabric which was adjusted to have a desired density shown in Table 1 was heated with use of a far infrared heater until the internal temperature reached 200°C. Then, with use of the mold (see Fig. 1 (a) and Fig. 1 (c)) set at 30°C, cold press at 3, 000 kN/m$^2$ for 7 seconds was performed to form a molded product having a density of 0.72 g/cm$^3$ and a thickness of 2.1 mm. The molded product did not have any see-through defect or crack on the raised portion, or wrinkle at the corners. Although the cold press time with use of the mold was as short as 7 seconds, the MD bending strength was 28 N/mm$^2$ and the TD bending strength was 29 N/mm$^2$, both of which were sufficiently high. The evaluation result in the odor sensory test was 3, i.e., there was obvious odor but not unpleasant.

Example 14

The same polylactic acid short fibers and kenaf fibers as in Example 1 were blended at a mass ratio of 20:80 with use of a roller card, and then opened to give a web. Then, needle-punching for intertwining the fibers was performed at a needle density of 60 needles/cm$^2$ to give a nonwoven fabric of which the weight per unit area was 563 g/m$^2$ and the thickness was 3.5 mm. The nonwoven fabric had a MD tensile strength of 52 N/cm$^2$ and a TD tensile strength of 31 N/cm$^2$, and also had a MD tensile stress of 12 N/cm$^2$ and a TD tensile stress of 8 N/cm$^2$ at 30% tensile elongation in a 200°C atmosphere. The crystallization temperature on cooling of the polylactic acid fibers in the nonwoven fabric was 127°C. The percentage of the kenaf fibers having a fiber length of 45 mm or longer was 90% in fiber length frequency distribution, which means highly strong intertwining between the polylactic acid fibers and the kenaf fibers in the nonwoven fabric.

Then, under the same molding conditions as in Example 1, a molded product having a density of 0.70 g/cm$^3$ and a thickness of 0.8 mm was formed. The molded product was rapidly formed and did not have any crack but had see-through defects on the raised portion. There was no wrinkle at the corners. Although the cold press time with use of the mold was as short as 8 seconds, the MD bending strength was 19 N/mm$^2$ and the TD bending strength was 16 N/mm$^2$, both of which were sufficiently high.

Example 15

The same polylactic acid short fibers and kenaf fibers as in Example 1 were blended at a mass ratio of 60:40 with use of a roller card, and then opened to give a web. Then, needle-punching for intertwining the fibers was performed at a needle density of 60 needles/cm$^2$ to give a nonwoven fabric of which the weight per unit area was 580 g/m$^2$ and the thickness was 3.6 mm. The nonwoven fabric had a MD tensile strength of 149 N/cm$^2$ and a TD tensile strength of 98 N/cm$^2$, and also had a MD tensile stress of 24 N/cm$^2$ and a TD tensile stress of 18 N/cm$^2$ at 30% tensile elongation in a 200°C atmosphere. The crystallization temperature on cooling of the polylactic acid fibers in the nonwoven fabric was 127°C. The percentage of the kenaf fibers having a fiber length of 45 mm or longer was 95% in fiber length frequency distribution, which means highly strong intertwining between the polylactic acid fibers and the kenaf fibers in the nonwoven fabric.

Then, under the same molding conditions as in Example 1, a molded product having a density of 0.73 g/cm$^3$ and a thickness of 0.8 mm was formed. The molded product was rapidly formed and did not have any see-through defect or crack on the raised portion, or wrinkle at the corners. Although the cold press time with use of the mold was as short as 8 seconds, the MD bending strength was 26 N/mm$^2$ and the TD bending strength was 25 N/mm$^2$, both of which were sufficiently high. The evaluation result in the odor sensory test was 2, i.e., there was odor but not unpleasant.

Example 16

Jute fibers were prepared by retting jute stalks in a swamp to harvest bast fibers and subsequently cutting them with use of a guillotine cutter. The obtained jute fibers had a fiber length of 123 mm, a fiber diameter of 43 μm, a number of duct-derived pores of 38, and a moisture content of 15% by mass and a tensile strength of 1.7 cN/dtex.

The same polylactic acid short fibers as in Example 1 and the above jute fibers were processed under the same conditions as in Example 1 to give a nonwoven fabric of which the weight per unit area was 1,513 g/m$^2$ and the thickness was 8.2 mm. The nonwoven fabric had a MD tensile strength of 151 N/cm$^2$ and a TD tensile strength of 110 N/cm$^2$, and also had a MD tensile stress of 54 N/cm$^2$ and a TD tensile stress of 23 N/cm$^2$ at 30% tensile elongation in a 200°C atmosphere. The crystallization temperature on cooling of the polylactic acid fibers in the nonwoven fabric was 127°C. The percentage of the kenaf fibers having a fiber length of 45 mm or longer was 88% in fiber length frequency distribution, which means strong intertwining between the polylactic acid fibers and the kenaf fibers in the nonwoven fabric.

Then, under the same molding conditions as in Example 1, a molded product having a density of 0.72 g/cm$^3$ and a thickness of 2.1 mm was formed. The molded product was rapidly formed and did not have any see-through defect or crack on the raised portion, or wrinkle at the corners. Although the cold press time with use of the mold was as short as 8 seconds, the MD bending strength was 26 N/mm$^2$ and the TD bending strength was 28 N/mm$^2$, both of which were sufficiently high.

Example 17

The same polylactic acid short fibers and kenaf fibers as in Example 1 were blended at a mass ratio of 30:70 by airlaying, and then opened to give a web. Then, needle-punching for intertwining the fibers was performed at a needle density of 60 needles/cm$^2$ to give a nonwoven fabric of which the weight per unit area was 1, 542 g/m$^2$ and the thickness was 8.3 mm. The nonwoven fabric had a MD tensile strength of 163 N/cm$^2$ and a TD tensile strength of 117 N/cm$^2$, and also had a MD tensile stress of 52 N/cm$^2$ and a TD tensile stress of 19 N/cm$^2$ at 30% tensile elongation in a 200°C atmosphere. The crystallization temperature on cooling of the polylactic acid fibers in the nonwoven fabric was 127°C. The percentage of the kenaf fibers having a fiber length of 45 mm or longer was 95% in fiber length frequency distribution, which means highly strong intertwining between the polylactic acid fibers and the kenaf fibers in the nonwoven fabric.

Then, under the same molding conditions as in Example 1, a molded product having a density of 0.73 g/cm$^3$ and a thickness of 2.1 mm was formed. The molded product was rapidly formed and did not have any see-through defect or crack on the raised portion, or wrinkle at the corners. Although the cold press time with use of the mold was as short as 8 seconds, the MD bending strength was 30 N/mm$^2$ and the TD bending strength was 29 N/mm$^2$, both of which were sufficiently high.

Comparative Example 1

Using polylactic acid chips (melting point: 170°C, weight average molecular weight: $10.6 \times 10^4$), 1% by mass of talc as a crystal nucleating agent having a median diameter d50 of $200 \times 10^3$ nm, and 2% by mass of triglycidyl isocyanurate as a hydrolysis suppressor ("TEPIC" by Nissan Chemical Industries, Ltd.), polylactic acid short fibers having a single fiber fineness of 6.6 dtex and a fiber length of 51 mm were obtained in the same manner as in Example 1. It was possible to stably obtain raw stock without breakage or fluff during the steps of spinning and stretching. The obtained polylactic acid short fibers had a tensile strength of 2.1 cN/dtex, a tensile elongation of 69%, a number of crimps of 11.6 crimps/25 mm, a percentage of crimp of 13%, and a dry-heat shrinkage of 1.4%, which were practically sufficient mechanical properties. However, the crystallization temperature on cooling of 99°C means slow crystallization.

The above polylactic acid short fibers and the same kenaf fibers as in Example 1 were processed under the same conditions as in Example 1 to give a nonwoven fabric of which the weight per unit area was 1,571 g/m$^2$ and the thickness was 10.6 mm. The nonwoven fabric had a MD tensile strength of 149 N/cm$^2$ and a TD tensile strength of 117 N/cm$^2$, and also had a MD tensile stress of 51 N/cm$^2$ and a TD tensile stress of 18 N/cm$^2$ at 30% tensile elongation in a 200°C atmosphere. The crystallization temperature on cooling of the polylactic acid fibers in the nonwoven fabric was 99°C, which means slow crystallization. The percentage of the kenaf fibers having a fiber length of 45 mm or longer was 70% in fiber length frequency distribution, which means highly strong intertwining between the polylactic acid fibers and the kenaf fibers in the nonwoven fabric.

Then, under the same molding conditions as in Example 1, a molded product having a density of 0.75 g/cm$^3$ and a thickness of 2. 1 mm was formed. The molded product was slowly formed but did not have any see-through defect or crack on the raised portion, or wrinkle at the corners. Since the cold press time with use of the mold was as short as 8 seconds, the polylactic acid (PLA) was not able to crystallize, resulting in low MD bending strength of 12 N/mm$^2$ and low TD bending strength of 8 N/mm$^2$.

Comparative Example 2

Using polylactic acid chips (melting point: 170°C, weight average molecular weight: 12.8 $\times$ 10$^4$) and 2% by mass of triglycidyl isocyanurate as a hydrolysis suppressor ("TEPIC" by Nissan Chemical Industries, Ltd.), polylactic acid short fibers having a single fiber fineness of 6.6 dtex and a fiber length of 51 mm were obtained in the same manner as in Example 1. It was possible to stably obtain raw stock without breakage or fluff during the steps of spinning and stretching. The obtained polylactic acid short fibers had a tensile strength of 2.3 cN/dtex, a tensile elongation of 71%, a number of crimps of 11.8 crimps/25 mm, a percentage of crimp of 15%, and a dry-heat shrinkage of 1.5%, which were practically sufficient mechanical properties. However, crystallization temperature on cooling was not detected.

The above polylactic acid short fibers and the same kenaf fibers as in Example 1 were processed under the same conditions as in Example 1 to give a nonwoven fabric of which the weight per unit area was 1,542 g/m$^2$ and the thickness was 10.1 mm. The nonwoven fabric had a MD tensile strength of 168 N/cm$^2$ and a TD tensile strength of 102 N/cm$^2$, and also had a MD tensile stress of 58 N/cm$^2$ and a TD tensile stress of 16 N/cm$^2$ at 30% tensile elongation in a 200°C atmosphere. Crystallization temperature on cooling of the polylactic acid fibers in the nonwoven fabric was not detected. The percentage of the kenaf fibers having a fiber length of 45 mm or longer was 64% in fiber length frequency distribution, which means strong intertwining between the polylactic acid fibers and the kenaf fibers in the nonwoven fabric.

Then, under the same molding conditions as in Example 1, a molded product having a density of 0.70 g/cm$^3$ and a thickness of 2.2 mm was formed. The molded product was slowly formed but did not have any see-through defect or crack on the raised portion, or wrinkle at the corners. Since the cold press time with use of the mold was as short as 8 seconds, the polylactic acid (PLA) was not able to crystallize, resulting in low MD bending strength of 9 N/mm$^2$ and low TD bending strength of 7 N/mm$^2$.

Comparative Example 3

The same polylactic acid short fibers and kenaf fibers as in Example 1 were blended at a weight ratio of 30:70 with use of a roller card, and then opened to give a web. Then, needle-punching for intertwining the fibers was performed at a needle density of 240 needles/cm$^2$ in total, i.e., 80 needles/cm$^2$ for the first punching, 80 needles/cm$^2$ for the second punching, and 80 needles/cm$^2$ for third punching to give a nonwoven fabric of which the weight per unit area was 521 g/m$^2$ and the thickness was 3.4 mm. The nonwoven fabric had a MD tensile strength of 14 N/cm$^2$ and a TD tensile strength of 9 N/cm$^2$, and also had a MD tensile stress of 2 N/cm$^2$ and a TD tensile stress of 1 N/cm$^2$ at 30% tensile elongation in a 200°C atmosphere. As a result, substantial kenaf fibers fell out of the nonwoven fabric. The crystallization temperature on cooling of the polylactic acid fibers in the nonwoven fabric was 127°C. The percentage of the kenaf fibers having a fiber length of 45 mm or longer was 8% in fiber length frequency distribution, which means weak intertwining between the polylactic acid fibers and the kenaf fibers in the nonwoven fabric.

Then, under the same molding conditions as in Example 1, a molded product having a density of 0.65 g/cm$^3$ and a thickness of 0.8 mm was formed. The molded product was rapidly formed. There was a crack on the raised portion, but no wrinkle at the corners. The cold press time with use of the mold was as short as 8 seconds. The MD bending strength was 5 N/mm$^2$ and the TD bending strength was 3 N/mm$^2$, both of which were low.

Comparative Example 4

The same polylactic acid short fibers and kenaf fibers as in Example 10 were processed under the same conditions as in Example 10 to give a nonwoven fabric of which the weight per unit area was 428 g/m$^2$ and the thickness was 2.9 mm. The nonwoven fabric had a MD tensile strength of 45 N/cm$^2$ and a TD tensile strength of 18 N/cm$^2$, and also had a MD tensile stress of 4 N/cm$^2$ and a TD tensile stress of 3 N/cm$^2$ at 30% tensile elongation in a 200°C atmosphere. The crystallization temperature on cooling of the polylactic acid fibers in the nonwoven fabric was 127°C. The percentage of the kenaf fibers having a fiber length of 45 mm or longer was 42% in fiber length frequency distribution, which means highly strong intertwining between the polylactic acid fibers and the kenaf fibers in the nonwoven fabric.

Then, under the same molding conditions as in Example 1, a molded product having a density of 0.71 g/cm$^3$ and a thickness of 0.6 mm was formed. The molded product was rapidly formed. There was a crack on the raised portion, but no wrinkle at the corners. Although the cold press time with use of the mold was as short as 8 seconds, the MD bending strength was 18 N/mm$^2$ and the TD bending strength was 15 N/mm$^2$, which were both

sufficiently high.

Comparative Example 5

The same polylactic acid short fibers and kenaf fibers as in Example 1 were processed under the same conditions as in Example 1 to give a nonwoven fabric of which the weight per unit area was 3,428 g/m$^2$ and the thickness was 14.0 mm. The nonwoven fabric had a MD tensile strength of 378 N/cm$^2$ and a TD tensile strength of 341 N/cm$^2$, and also had a MD tensile stress of 93 N/cm$^2$ and a TD tensile stress of 84 N/cm$^2$ at 30% tensile elongation in a 200°C atmosphere. The air permeability was as low as 21 cc/cm$^2$·sec. The crystallization temperature on cooling of the polylactic acid short fibers in the nonwoven fabric was 127°C. The percentage of the kenaf fibers having a fiber length of 45 mm or longer was 97% in fiber length frequency distribution, which means highly strong intertwining between the polylactic acid fibers and the kenaf fibers in the nonwoven fabric.

Then, under the same molding conditions as in Example 1, a molded product having a density of 0.69 g/cm$^3$ and a thickness of 5.0 mm was formed. The molded product was rapidly formed and did not have any see-through defect or crack on the raised portion, but had a wrinkle with a height of 0.5 mm or more at a corner. Although the cold press time with use of the mold was as short as 8 seconds, the MD bending strength was 22 N/mm$^2$ and the TD bending strength was 20 N/mm$^2$, both of which were sufficiently high.

Comparative Example 6

The same polylactic acid short fibers and kenaf fibers as in Example 1 were blended at a mass ratio of 10:90 with use of a roller card, and then opened to give a web. Then, needle-punching for intertwining the fibers was performed at a needle density of 60 needles/cm$^2$ to give a nonwoven fabric of which the weight per unit area was 524 g/m$^2$ and the thickness was 3.5 mm. The nonwoven fabric had a MD tensile strength of 32 N/cm$^2$ and a TD tensile strength of 17 N/cm$^2$, and also had a MD tensile stress of 6 N/cm$^2$ and a TD tensile stress of 4 N/cm$^2$ at 30% tensile elongation in a 200°C atmosphere. The crystallization temperature on cooling of the polylactic acid fibers in the nonwoven fabric was 127°C. The percentage of the kenaf fibers having a fiber length of 45 mm or longer was 86% in fiber length frequency distribution, but the intertwining between the polylactic acid fibers and the kenaf fibers in the nonwoven fabric was weak.

Then, under the same molding conditions as in Example 1, a molded product having a density of 0.66 g/cm$^3$ and a thickness of 0.8 mm was formed. The molded product was rapidly formed. There was a crack on the raised portion, but no wrinkle at the corners. The cold press time with use of the mold was as short as 8 seconds. The MD bending strength was 13 N/mm$^2$ and the TD bending strength was 9 N/mm$^2$, both of which were low.

Table 1-1

| | | | Example 1 | Example 2 | Example 3 | Example 4 | Example 5 | Example 6 |
|---|---|---|---|---|---|---|---|---|
| Polylactic acid fiber Raw stock | | | | | | | | |
| | Fineness | dtex | 6.6 | 6.6 | 6.6 | 6.6 | 6.6 | 6.6 |
| | Fiber length | mm | 51 | 51 | 51 | 51 | 51 | 51 |
| | Tensile strength | cN/dtex | 2.1 | 2.1 | 2.1 | 2.1 | 2.1 | 2.1 |
| | Tensile elongation | % | 72 | 72 | 72 | 72 | 72 | 72 |
| | Dry-heat shrinkage | % | 1.2 | 1.2 | 1.2 | 1.2 | 1.2 | 1.2 |
| | Molecular weight | Mn/10$^4$ | 6.7 | 6.7 | 6.7 | 6.7 | 6.7 | 6.7 |
| | | Mw/10$^4$ | 11.3 | 11.3 | 11.3 | 11.3 | 11.3 | 11.3 |

(continued)

|  |  |  | Example 1 | Example 2 | Example 3 | Example 4 | Example 5 | Example 6 |
|---|---|---|---|---|---|---|---|---|
| Crystal nucleating agent |  |  |  |  |  |  |  |  |
|  | Type |  | CB | CB | CB | CB | CB | CB |
|  | Amount | mass% | 1 | 1 | 1 | 1 | 1 | 1 |
|  | Particle diameter | nm | 20 | 20 | 20 | 20 | 20 | 20 |
| Crystallization temperature on cooling |  | °C | 127 | 127 | 127 | 127 | 127 | 127 |
| Hydrolysis suppressor |  |  |  |  |  |  |  |  |
|  | Type |  | TEPIC | TEPIC | TEPIC | TEPIC | TEPIC | TEPIC |
|  | Amount | mass% | 2 | 2 | 2 | 2 | 2 | 2 |
| Residual epoxy value |  | Eq/kg | 0.18 | 0.18 | 0.18 | 0.18 | 0.18 | 0.18 |
| Natural fiber Raw stock |  |  |  |  |  |  |  |  |
| Type of fiber |  |  | Kenaf | Kenaf | Kenaf | Kenaf | Kenaf | Kenaf |
| Fiber length |  | mm | 119 | 119 | 119 | 119 | 119 | 119 |
| Fiber diameter |  | μm | 58 | 58 | 58 | 58 | 58 | 58 |
| Number of pores |  |  | 41 | 41 | 41 | 41 | 41 | 41 |
| Moisture content |  | mass% | 17 | 17 | 17 | 17 | 17 | 17 |
| Tensile strength |  | cN/dtex | 2.0 | 2.0 | 2.0 | 2.0 | 2.0 | 2.0 |
| Note CB: carbon black TEPIC (registered trademark): triglycidyl isocyanurate (made by Nissan Chemical Industries, Ltd.) |  |  |  |  |  |  |  |  |

Table 1-2

| | | Example 1 | Example 2 | Example 3 | Example 4 | Example 5 | Example 6 |
|---|---|---|---|---|---|---|---|
| Nonwoven fabric | | | | | | | |
| Mixture ratio | | | | | | | |
| Polylactic acid fiber | mass% | 30 | 50 | 30 | 30 | 30 | 50 |
| Natural fiber | mass% | 70 | 50 | 70 | 70 | 70 | 50 |
| Crystallization temperature on cooling | | | | | | | |
| Polylactic acid fiber | °C | 127 | 127 | 127 | 127 | 127 | 127 |
| Fiber length frequency distribution of kenaf fiber | | | | | | | |
| Fiber length of less than 45 mm | % | 14 | 13 | 43 | 9 | 6 | 8 |
| Fiber length of not less than 45 mm and less than 65 mm | % | 28 | 31 | 31 | 33 | 32 | 30 |
| Fiber length of not less than 65 mm and less than 85 mm | % | 34 | 30 | 20 | 34 | 34 | 32 |
| Fiber length of not less than 85 mm | % | 24 | 26 | 6 | 24 | 28 | 30 |
| Weight per unit area | g/m$^2$ | 529 | 556 | 514 | 1012 | 1584 | 1615 |
| Thickness | mm | 3.4 | 3.6 | 3.4 | 6.1 | 8.2 | 8.2 |
| Air permeability | cc/cm$^2$·sec | 105 | 102 | 104 | 75 | 43 | 39 |
| Needle punching | | | | | | | |
| Needle density for first punching | needles/cm$^2$ | 60 | 60 | 80 | 60 | 60 | 60 |
| Needle density for second punching | needles/cm$^2$ | - | - | 80 | - | - | - |
| Needle density for third punching | needles/cm$^2$ | - | - | - | - | - | - |
| Needle density in total | needles/cm$^2$ | 60 | 60 | 160 | 60 | 60 | 60 |
| Tensile strength | | | | | | | |
| MD (machine direction) | N/cm$^2$ | 98 | 128 | 58 | 131 | 157 | 175 |
| TD (transverse direction) | N/cm$^2$ | 56 | 84 | 34 | 107 | 110 | 107 |
| Tensile elongation | | | | | | | |

(continued)

| | | | | Example 1 | Example 2 | Example 3 | Example 4 | Example 5 | Example 6 |
|---|---|---|---|---|---|---|---|---|---|
| | | MD | % | 61 | 66 | 53 | 48 | 43 | 52 |
| | | TD | % | 100 | 100 | 92 | 87 | 67 | 81 |
| | Tensile stress of nonwoven fabric at 30% tensile elongation in 200°C atmosphere | | | | | | | | |
| | | MD | N/cm$^2$ | 14 | 19 | 9 | 32 | 56 | 44 |
| | | TD | N/cm$^2$ | 10 | 16 | 8 | 21 | 17 | 15 |
| Molded product | | | | | | | | | |
| | Weight per unit area | | g/m$^2$ | 529 | 556 | 514 | 1012 | 1584 | 1615 |
| | Thickness | | mm | 0.7 | 0.8 | 0.7 | 1.4 | 2.1 | 2.2 |
| | Density | | g/cm$^3$ | 0.76 | 0.70 | 0.73 | 0.72 | 0.75 | 0.73 |
| | Moldability | | | | | | | | |
| | | Wrinkles at corner of raised portion | Evaluation result | A | A | A | A | A | A |
| | | See-through defects or cracks on raised portion | Evaluation result | A | A | B | A | A | A |
| | Bending strength | | | | | | | | |
| | | MD | N/mm$^2$ | 25 | 24 | 17 | 20 | 27 | 26 |
| | | | Evaluation result | A | A | B | A | A | A |
| | | TD | N/mm$^2$ | 27 | 22 | 15 | 23 | 29 | 27 |
| | | | Evaluation result | A | A | B | A | A | A |

Table 2-1

| Polylactic acid fiber Raw stock | | | Example 7 | Example 8 | Example 9 | Example 10 | Example 11 | Example 12 | Example 13 |
|---|---|---|---|---|---|---|---|---|---|
| Fineness | | dtex | 6.6 | 6.6 | 6.6 | 6.6 | 6.6 | 6.6 | 6.6 |
| Fiber length | | mm | 51 | 51 | 51 | 51 | 51 | 51 | 51 |
| Tensile strength | | cN/dtex | 2.1 | 2.1 | 2.1 | 2.1 | 2.3 | 2.2 | 2.0 |
| Tensile elongation | | % | 72 | 72 | 72 | 72 | 56 | 71 | 70 |
| Dry-heat shrinkage | | % | 1.2 | 1.2 | 1.2 | 1.2 | 7.5 | 1.4 | 1.1 |
| Molecular weight | | $M_n/10^4$ | 6.7 | 6.7 | 6.7 | 6.7 | 6.3 | 5.2 | 6.7 |
| Molecular weight | | $M_w/10^4$ | 11.3 | 11.3 | 11.3 | 11.3 | 10.8 | 9.7 | 11.3 |
| Crystal nucleating agent | Type | | CB | CB | CB | CB | CB | CB | CB |
| | Amount | mass% | 1 | 1 | 1 | 1 | 1 | 1 | 1 |
| | Particle diameter | nm | 20 | 20 | 20 | 20 | 20 | 20 | 10 |
| Crystallization temperature on cooling | | °C | 127 | 127 | 127 | 127 | 127 | 127 | 138 |
| Hydrolysis suppressor | Type | | TEPIC | TEPIC | TEPIC | TEPIC | TEPIC | TEPIC | TEPIC |
| | Amount | mass% | 2 | 2 | 2 | 2 | 2 | 1 | 2 |
| Residual epoxy value | | Eq/kg | 0.18 | 0.18 | 0.18 | 0.18 | 0.19 | 0.04 | 0.18 |
| Natural fiber Raw stock | | | | | | | | | |
| Type of fiber | | | Kenaf | Kenaf | Kenaf | Kenaf | Kenaf | Kenaf | Kenaf |
| Fiber length | | mm | 142 | 119 | 119 | 184 | 119 | 119 | 119 |
| Fiber diameter | | μm | 40 | 58 | 58 | 93 | 58 | 58 | 58 |
| Number of pores | | | 28 | 41 | 41 | 30 | 41 | 41 | 41 |
| Moisture content | | mass% | 16 | 17 | 17 | 13 | 17 | 17 | 17 |
| Tensile strength | | cN/dtex | 1.5 | 2.0 | 2.0 | 0.9 | 2.0 | 2.0 | 2.0 |

Note
CB: carbon black

(continued)

|  | Example 7 | Example 8 | Example 9 | Example 10 | Example 11 | Example 12 | Example 13 |
|---|---|---|---|---|---|---|---|
| TEPIC (registered trademark): triglycidyl isocyanurate (made by Nissan Chemical Industries, Ltd.) | | | | | | | |

Table 2-2

| | | | Example 7 | Example 8 | Example 9 | Example 10 | Example 11 | Example 12 | Example 13 |
|---|---|---|---|---|---|---|---|---|---|
| Nonwoven fabric | | | | | | | | | |
| Mixture ratio | | | | | | | | | |
| | Polylactic acid fiber | mass% | 50 | 30 | 30 | 30 | 30 | 30 | 30 |
| | Natural fiber | mass% | 50 | 70 | 70 | 70 | 70 | 70 | 70 |
| Crystallization temperature on cooling | | | | | | | | | |
| | Polylactic acid fiber | °C | 127 | 127 | 127 | 127 | 127 | 127 | 138 |
| Fiber length frequency distribution of kenaf fiber | | | | | | | | | |
| | Fiber length of less than 45 mm | % | 32 | 5 | 4 | 48 | 8 | 11 | 5 |
| | Fiber length of not less than 45 mm and less than 65 mm | % | 32 | 30 | 38 | 29 | 34 | 25 | 34 |
| | Fiber length of not less than 65 mm and less than 85 mm | % | 29 | 39 | 43 | 19 | 31 | 35 | 36 |
| | Fiber length of not less than 85 mm | % | 7 | 26 | 15 | 4 | 27 | 29 | 28 |
| Weight per unit area | | g/m$^2$ | 1571 | 1982 | 2538 | 530 | 1534 | 516 | 1577 |
| Thickness | | mm | 10.4 | 13.1 | 13.8 | 3.0 | 8.1 | 3.5 | 8.1 |
| Air permeability | | cc/cm$^2$·sec | 39 | 32 | 26 | 110 | 41 | 99 | 42 |
| Needle punching | | | | | | | | | |
| | Needle density for first punching | needles/cm$^2$ | 40 | 60 | 60 | 60 | 60 | 60 | 60 |
| | Needle density for second punching | needles/cm$^2$ | - | - | - | - | - | - | - |
| | Needle density for third punching | needles/cm$^2$ | - | - | - | - | - | - | - |
| | Needle density in total | needles/cm$^2$ | 40 | 60 | 60 | 60 | 60 | 60 | 60 |
| Tensile strength | | | | | | | | | |
| | MD (machine direction) | N/cm$^2$ | 61 | 193 | 281 | 81 | 166 | 74 | 154 |
| | TD (transverse direction) | N/cm$^2$ | 33 | 157 | 237 | 35 | 114 | 44 | 108 |

| | | | Example 7 | Example 8 | Example 9 | Example 10 | Example 11 | Example 12 | Example 13 |
|---|---|---|---|---|---|---|---|---|---|
| Tensile elongation | | | | | | | | | |
| | MD | % | 36 | 51 | 62 | 39 | 64 | 53 | 45 |
| | TD | % | 56 | 68 | 74 | 56 | 76 | 98 | 64 |
| Tensile stress of nonwoven fabric at 30% tensile elongation in 200°C atmosphere | | | | | | | | | |
| | MD | N/cm$^2$ | 10 | 63 | 78 | 12 | 59 | 10 | 51 |
| | TD | N/cm$^2$ | 5 | 27 | 53 | 7 | 23 | 8 | 18 |
| Molded product | | | | | | | | | |
| Weight per unit area | | q/m$^2$ | 1571 | 1982 | 2538 | 530 | 1534 | 516 | 1503 |
| Thickness | | mm | 2.2 | 2.7 | 2.1 | 0.7 | 2.1 | 0.7 | 2.1 |
| Density | | g/cm$^3$ | 0.71 | 0.73 | 1.21 | 0.76 | 0.73 | 0.74 | 0.72 |
| Moldability | | | | | | | | | |
| | Wrinkles at corner of raised portion | Evaluation result | A | A | B | A | B | A | A |
| | See-through defects or cracks on raised portion | Evaluation result | A | A | A | B | A | B | A |
| Bending strength | | | | | | | | | |
| | MD | N/mm$^2$ | 23 | 25 | 55 | 28 | 22 | 18 | 28 |
| | | Evaluation result | A | A | A | A | A | B | A |
| | TD | N/mm$^2$ | 19 | 26 | 48 | 26 | 23 | 13 | 29 |
| | | Evaluation result | B | A | A | A | A | B | A |

EP 2 781 636 B1

33

Table 3-1

| | | | Comparative Example 1 | Comparative Example 2 | Comparative Example 3 | Comparative Example 4 | Comparative Example 5 | Comparative Example 6 |
|---|---|---|---|---|---|---|---|---|
| Polylactic acid fiber Raw stock | | | | | | | | |
| Fineness | | dtex | 6.6 | 6.6 | 6.6 | 6.6 | 6.6 | 6.6 |
| Fiber length | | mm | 51 | 51 | 51 | 51 | 51 | 51 |
| Tensile strength | | cN/dtex | 2.1 | 2.3 | 2.1 | 2.1 | 2.1 | 2.1 |
| Tensile elongation | | % | 69 | 71 | 72 | 72 | 72 | 72 |
| Dry-heat shrinkage | | % | 1.4 | 1.5 | 1.2 | 1.2 | 1.2 | 1.2 |
| Molecular weight | | $Mn/10^4$ | 6.1 | 7.1 | 6.7 | 6.7 | 6.7 | 6.7 |
| | | $Mw/10^4$ | 10.6 | 12.8 | 11.3 | 11.3 | 11.3 | 11.3 |
| Crystal nucleating agent | Type | | Talc | - | CB | CB | CB | CB |
| | Amount | mass% | 1 | - | 1 | -1 | 1 | 1 |
| | Particle diameter | nm | $200 \times 10^3$ | - | 20 | 20 | 20 | 20 |
| Crystallization temperature on cooling | | °C | 99 | - | 127 | 127 | 127 | 127 |
| Hydrolysis suppressor | Type | | TEPIC | TEPIC | TEPIC | TEPIC | TEPIC | TEPIC |
| | Amount | mass% | 2 | 2 | 2 | 2 | 2 | 2 |
| Residual epoxy value | | Eq/kg | 0.17 | 0.17 | 0.18 | 0.18 | 0.18 | 0.18 |
| Natural fiber Raw stock | | | | | | | | |
| Type of fiber | | | Kenaf | Kenaf | Kenaf | Kenaf | Kenaf | Kenaf |
| Fiber length | | mm | 119 | 119 | 119 | 119 | 119 | 119 |
| Fiber diameter | | μm | 58 | 58 | 58 | 58 | 58 | 58 |
| Number of pores | | | 41 | 41 | 41 | 41 | 41 | 41 |
| Moisture content | | mass% | 17 | 17 | 17 | 17 | 17 | 17 |

|  |  | Comparative Example 1 | Comparative Example 2 | Comparative Example 3 | Comparative Example 4 | Comparative Example 5 | Comparative Example 6 |
|---|---|---|---|---|---|---|---|
| Tensile strength | cN/dtex | 2.0 | 2.0 | 2.0 | 2.0 | 2.0 | 2.0 |

Note
  CB: carbon black
  TEPIC (registered trademark): triglycidyl isocyanurate (made by Nissan Chemical Industries, Ltd.)

Table 3-2

| | | | Comparative Example 1 | Comparative Example 2 | Comparative Example 3 | Comparative Example 4 | Comparative Example 5 | Comparative Example 6 |
|---|---|---|---|---|---|---|---|---|
| Nonwoven fabric | | | | | | | | |
| | Mixture ratio | | | | | | | |
| | | Polylactic acid fiber | mass% | 30 | 30 | 30 | 30 | 30 | 10 |
| | | Natural fiber | mass% | 70 | 70 | 70 | 70 | 70 | 90 |
| | Crystallization temperature on cooling | | | | | | | |
| | | Polylactic acid fiber | °C | 99 | - | 127 | 127 | 127 | 127 |
| | Fiber length frequency distribution of kenaf fiber | | | | | | | |
| | | Fiber length of less than 45 mm | % | 30 | 36 | 92 | 58 | 3 | 14 |
| | | Fiber length of not less than 45 mm and less than 65 mm | % | 35 | 32 | 8 | 28 | 45 | 35 |
| | | Fiber length of not less than 65 mm and less than 85 mm | % | 27 | 25 | 0 | 11 | 39 | 37 |
| | | Fiber length of not less than 85 mm | % | 8 | 7 | 0 | 3 | 13 | 14 |
| | Weight per unit area | | g/m$^2$ | 1571 | 1542 | 521 | 428 | 3428 | 524 |
| | Thickness | | mm | 10.6 | 10.1 | 3.4 | 2.9 | 14.0 | 3.5 |
| | Air permeability | | cc/cm$^2$·sec | 42 | 43 | 110 | 118 | 21 | 106 |
| | Needle punching | | | | | | | |
| | | Needle density for first punching | needles/cm$^2$ | 60 | 60 | 80 | 60 | 60 | 60 |
| | | Needle density for second punching | needles/cm$^2$ | - | - | 80 | - | - | - |
| | | Needle density for third punching | needles/cm$^2$ | - | - | 80 | - | - | - |

(continued)

| | | Comparative Example 1 | Comparative Example 2 | Comparative Example 3 | Comparative Example 4 | Comparative Example 5 | Comparative Example 6 |
|---|---|---|---|---|---|---|---|
| Needle density in total | needles/cm² | 60 | 60 | 240 | 60 | 60 | 60 |
| Tensile strength | | | | | | | |
| MD (machine direction) | N/cm² | 149 | 168 | 14 | 45 | 378 | 32 |
| TD (transverse direction) | N/cm² | 117 | 102 | 9 | 18 | 341 | 17 |
| Tensile elongation | | | | | | | |
| MD | % | 42 | 59 | 29 | 46 | 75 | 35 |
| TD | % | 53 | 73 | 35 | 45 | 84 | 59 |
| Tensile stress of nonwoven fabric at 30% tensile elongation in 200°C atmosphere | | | | | | | |
| MD | N/cm² | 51 | 58 | 2 | 4 | 93 | 6 |
| TD | N/cm² | 18 | 16 | 1 | 3 | 84 | 4 |
| Molded product | | | | | | | |
| Weight per unit area | g/m² | 1571 | 1542 | 521 | 428 | 3428 | 524 |
| Thickness | mm | 2.3 | 2.2 | 0.8 | 0.6 | 5.0 | 0.8 |
| Density | g/cm³ | 0.68 | 0.70 | 0.65 | 0.71 | 0.69 | 0.66 |
| Moldability | | | | | | | |
| Wrinkles at corner of raised portion | Evaluation result | A | A | A | A | C | A |
| See-through defects or cracks on raised portion | Evaluation result | A | A | C | C | A | C |
| Bending strength | | | | | | | |
| MD | N/mm² | 12 | 9 | 5 | 18 | 22 | 13 |

(continued)

| | | | | Comparative Example 1 | Comparative Example 2 | Comparative Example 3 | Comparative Example 4 | Comparative Example 5 | Comparative Example 6 |
|---|---|---|---|---|---|---|---|---|---|
| | | | Evaluation result | B | C | C | B | A | B |
| | | TD | N/mm$^2$ | 8 | 7 | 3 | 15 | 20 | 9 |
| | | | Evaluation result | C | C | C | B | A | C |

Table 4

| | | | Example 1 | Example 2 | Example 5 | Example 6 | Example 7 | Example 10 | Example 13 |
|---|---|---|---|---|---|---|---|---|---|
| Natural fiber Raw stock | | | | | | | | | |
| | Amount of odor | | | | | | | | |
| | | 1-Methoxy-2-propyl acetate | µg/kg | 0.3 | 0.3 | 0.3 | 0.3 | 0.1 | 0.4 | 0.3 |
| | | 2-Methoxyethyl acetate | µg/kg | 0.9 | 0.9 | 0.9 | 0.9 | 0.4 | 1.8 | 0.9 |
| | | Acetic acid | µg/kg | 0.3 | 0.3 | 0.3 | 0.3 | 0.2 | 3.7 | 0.3 |
| | | Trimethyl benzene | µg/kg | 1.1 | 1.1 | 1.1 | 1.1 | 0.9 | 2.2 | 1.1 |
| | | Acetaldehyde | µg/kg | 4.2 | 4.2 | 4.2 | 4.2 | 1.8 | 5.8 | 4.2 |
| | | Formaldehyde | µg/kg | 0 | 0 | 0 | 0 | 0 | 0 | 0 |
| Nonwoven fabric | | | | | | | | | |
| | Amount of odor | | | | | | | | |
| | | 1-Methoxy-2-propyl acetate | µg/kg | 0.3 | 0.3 | 0.3 | 0.3 | 0.2 | 0.5 | 0.3 |
| | | 2-Methoxyethyl acetate | µg/kg | 0.9 | 0.9 | 0.9 | 0.9 | 0.4 | 2.1 | 0.9 |
| | | Acetic acid | µg/kg | 2.7 | 2.4 | 2.9 | 2.2 | 1.5 | 4.9 | 2.5 |
| | | Trimethyl benzene | µg/kg | 1.8 | 1.5 | 1.8 | 1.5 | 1.1 | 2.7 | 1.4 |
| | | Acetaldehyde | µg/kg | 5.2 | 4.1 | 5.1 | 3.9 | 2.4 | 6.8 | 4.0 |
| | | Formaldehyde | µg/kg | 0 | 0 | 0 | 0 | 0 | 0 | 0 |
| Molded product | | | | | | | | | |
| | Odor sensory test | | | 2 | 2 | 3 | 3 | 1 | 4 | 3 |

Table 5-1

|  |  | Example 14 | Example 15 | Example 16 | Example 17 |
|---|---|---|---|---|---|
| Polylactic acid fiber Raw stock |  |  |  |  |  |
| Fineness | dtex | 6.6 | 6.6 | 6.6 | 6.6 |
| Fiber length | mm | 51 | 51 | 51 | 51 |
| Tensile strength | cN/dtex | 2.1 | 2.1 | 2.1 | 2.1 |
| Tensile elongation | % | 72 | 72 | 72 | 72 |
| Dry-heat shrinkage | % | 1.2 | 1.2 | 1.2 | 1.2 |
| Molecular weight | $Mn/10^4$ | 6.7 | 6.7 | 6.7 | 6.7 |
|  | $Mw/10^4$ | 11.3 | 11.3 | 11.3 | 11.3 |
| Crystal nucleating agent |  |  |  |  |  |
| Type |  | CB | CB | CB | CB |
| Amount | mass% | 1 | 1 | 1 | 1 |
| Particle diameter | nm | 20 | 20 | 20 | 20 |
| Crystallization temperature on cooling | °C | 127 | 127 | 127 | 127 |
| Hydrolysis suppressor |  |  |  |  |  |
| Type |  | TEPIC | TEPIC | TEPIC | TEPIC |
| Amount | mass% | 2 | 2 | 2 | 2 |
| Residual epoxy value | Eq/kg | 0.18 | 0.18 | 0.18 | 0.18 |
| Natural fiber Raw stock |  |  |  |  |  |
| Type of fiber |  | Kenaf | Kenaf | Jute | Kenaf |
| Fiber length | mm | 119 | 119 | 123 | 119 |
| Fiber diameter | μm | 58 | 58 | 43 | 58 |
| Number of pores |  | 41 | 41 | 38 | 41 |
| Moisture content | mass% | 17 | 17 | 15 | 17 |
| Tensile strength | cN/dtex | 2.0 | 2.0 | 1.7 | 2.0 |

Note
  CB: carbon black
  TEPIC (registered trademark): triglycidyl isocyanurate (made by Nissan Chemical Industries, Ltd.)

Table 5-2

|  |  | Example 14 | Example 15 | Example 16 | Example 17 |
|---|---|---|---|---|---|
| Nonwoven fabric |  |  |  |  |  |
| Mixture ratio |  |  |  |  |  |
| Polylactic acid fiber | mass% | 20 | 60 | 30 | 30 |
| Natural fiber | mass% | 80 | 40 | 70 | 70 |
| Crystallization temperature on cooling |  |  |  |  |  |
| Polylactic acid fiber | °C | 127 | 127 | 127 | 127 |
| Fiber length frequency distribution of kenaf fiber |  |  |  |  |  |

(continued)

| | | | | Example 14 | Example 15 | Example 16 | Example 17 |
|---|---|---|---|---|---|---|---|
| | | Fiber length of less than 45 mm | % | 10 | 5 | 12 | 5 |
| | | Fiber length of not less than 45 mm and less than 65 mm | % | 35 | 31 | 34 | 28 |
| | | Fiber length of not less than 65 mm and less than 85 mm | % | 34 | 30 | 31 | 35 |
| | | Fiber length of not less than 85 mm | % | 21 | 34 | 23 | 32 |
| | Weight per unit area | | g/m$^2$ | 563 | 580 | 1513 | 1542 |
| | Thickness | | mm | 3.5 | 3.6 | 8.2 | 8.3 |
| | Air permeability | | cc/cm$^2$·sec | 102 | 104 | 41 | 40 |
| | Needle punching | | | | | | |
| | | Needle density for first punching | needles/cm$^2$ | 60 | 60 | 60 | 60 |
| | | Needle density for second punching | needles/cm$^2$ | - | - | - | - |
| | | Needle density for third punching | needles/cm$^2$ | - | - | - | - |
| | | Needle density in total | needles/cm$^2$ | 60 | 60 | 60 | 60 |
| | Tensile strength | | | | | | |
| | | MD (machine direction) | N/cm$^2$ | 52 | 149 | 151 | 163 |
| | | TD (transverse direction) | N/cm$^2$ | 31 | 98 | 110 | 117 |
| | Tensile elongation | | | | | | |
| | | MD | % | 52 | 72 | 42 | 50 |
| | | TD | % | 81 | 100 | 65 | 67 |
| | Tensile stress of nonwoven fabric at 30% tensile elongation in 200°C atmosphere | | | | | | |
| | | MD | N/cm$^2$ | 12 | 24 | 54 | 52 |
| | | TD | N/cm$^2$ | 8 | 18 | 23 | 19 |
| Molded product | | | | | | | |
| | Weight per unit area | | g/m$^2$ | 563 | 580 | 1513 | 1542 |
| | Thickness | | mm | 0.8 | 0.8 | 2.1 | 2.1 |
| | Density | | g/cm$^3$ | 0.70 | 0.73 | 0.72 | 0.73 |
| | Moldability | | | | | | |
| | | Wrinkles at corner of raised portion | Evaluation result | A | A | A | A |
| | | See-through defects or cracks on raised portion | Evaluation result | B | A | A | A |
| | Bending strength | | | | | | |

(continued)

|  |  |  |  | | Example 14 | Example 15 | Example 16 | Example 17 |
|---|---|---|---|---|---|---|---|---|
|  |  | MD |  | N/mm$^2$ | 19 | 26 | 26 | 30 |
|  |  |  |  | Evaluation result | B | A | A | A |
|  |  | TD |  | N/mm$^2$ | 16 | 25 | 28 | 29 |
|  |  |  |  | Evaluation result | B | A | A | A |

Industrial Applicability

The nonwoven fabric of the present invention is useful for forming press molding products, and applicable to, for example, automobile parts, electric or electronic parts, building materials, civil engineering materials, furniture members, and materials for game machines. Automobile parts to which the nonwoven fabric is applicable include, in particular, interior materials, such as a ceiling material, a package tray, a back board of a front seat or a rear seat, a door trim, a pillar, etc.

Reference Signs List

1   Male mold
2   Female mold
3   Molded product

**Claims**

1. A nonwoven fabric for press molding comprising polylactic acid fibers and natural fibers, the nonwoven fabric being **characterized by** that the polylactic acid fibers have a crystallization temperature on cooling of 120 °C or higher, that the nonwoven fabric has a tensile strength of 20 N/cm$^2$ or higher, and that the nonwoven fabric has a tensile stress of 80 N/cm$^2$ or less at 30% tensile elongation in a 200 °C atmosphere.

2. The nonwoven fabric for press molding according to claim 1, wherein the nonwoven fabric has a weight per unit area of 450 to 3,000 g/m$^2$.

3. The nonwoven fabric for press molding according to claim 1 or 2, wherein 30% or more of the natural fibers have a fiber length of 45 mm or longer.

4. The nonwoven fabric for press molding according to any of claims 1 to 3, wherein the polylactic acid fibers comprise carbon black.

5. The nonwoven fabric for press molding according to any of claims 1 to 4, wherein the dry-heat shrinkage of the polylactic acid fibers is 5% or less.

6. The nonwoven fabric for press molding according to any of claims 1 to 5, wherein the tensile strength of the natural fibers is 1.0 cN/dtex or more.

7. The nonwoven fabric for press molding according to any of claims 1 to 6, wherein the natural fibers are kenaf fibers.

8. A method for producing a molded product, the method comprising press-molding the nonwoven fabric for press molding according to any of claims 1 to 7.

9. The method for producing a molded product according to claim 8, wherein the press molding is performed using a mold having a cooling means for a molding time of 8 seconds or less.

**10.** The method for producing a molded product according to claim 8 or 9, wherein the natural fibers to be mixed are kenaf fibers.

**Patentansprüche**

**1.** Vliesstoff zur Pressformung, der Polymilchsäurefasern und Naturfasern umfasst, wobei der Vliesstoff **dadurch gekennzeichnet ist, dass** die Polymilchsäurefasern eine Kristallisationstemperatur beim Abkühlen von 120 °C oder mehr haben, der Vliesstoff eine Zugfestigkeit von 20 N/cm$^2$ oder mehr und der Vliesstoff eine Zugspannung von 80 N/cm$^2$ oder weniger bei 30 % Zugdehnung in einer Atmosphäre mit 200 °C hat.

**2.** Vliesstoff zur Pressformung nach Anspruch 1, wobei der Vliesstoff einen Gewicht-pro-Flächenbereich von 450 bis 3.000 g/m$^2$ hat.

**3.** Vliesstoff zur Pressformung nach Anspruch 1 oder 2, wobei 30 % oder mehr der Naturfasern eine Faserlänge von 45 mm oder länger haben.

**4.** Vliesstoff zur Pressformung nach einem der Ansprüche 1 bis 3, wobei die Polymilchsäurefasern Ruß umfassen.

**5.** Vliesstoff zur Pressformung nach einem der Ansprüche 1 bis 4, wobei die Trockenwärmeschrumpfung der Polymilchsäurefasern 5 % oder weniger beträgt.

**6.** Vliesstoff zur Pressformung nach einem der Ansprüche 1 bis 5, wobei die Zugfestigkeit der Naturfasern 1,0 cN/dtex oder mehr beträgt.

**7.** Vliesstoff zur Pressformung nach einem der Ansprüche 1 bis 6, wobei die Naturfasern Kenaffasern sind.

**8.** Verfahren zur Herstellung eines Formprodukts, wobei das Verfahren die Pressformung des Vliesstoffs zur Pressformung nach einem der Ansprüche 1 bis 7 umfasst.

**9.** Verfahren zur Herstellung eines Formprodukts nach Anspruch 8, wobei das Pressformen für eine Formungszeit von 8 Sekunden oder weniger unter Verwendung einer Form durchgeführt wird, die ein Kühlmittel aufweist.

**10.** Verfahren zur Herstellung eines Formprodukts nach Anspruch 8 oder 9, wobei die beizumischenden Naturfasern Kenaffasern sind.

**Revendications**

**1.** Textile non tissé pour moulage par compression comprenant des fibres d'acide polylactique et des fibres naturelles, le textile non tissé étant **caractérisé par le fait que** les fibres d'acide polylactique ont une température de cristallisation lors du refroidissement supérieure ou égale à 120 °C, que le textile non tissé a une résistance à la traction supérieure ou égale à 20 N/cm$^2$, et que le textile non tissé a une contrainte de traction inférieure ou égale à 80 N/cm$^2$ à un allongement en traction de 30 % dans une atmosphère à 200 °C.

**2.** Textile non tissé pour moulage par compression selon la revendication 1, lequel textile non tissé a un poids par unité de surface de 450 à 3 000 g/m$^2$.

**3.** Textile non tissé pour moulage par compression selon la revendication 1 ou 2, dans lequel 30 % ou plus des fibres naturelles ont une longueur de fibre supérieure ou égale à 45 mm.

**4.** Textile non tissé pour moulage par compression selon l'une quelconque des revendications 1 à 3, dans lequel les fibres d'acide polylactique comprennent du noir de carbone.

**5.** Textile non tissé pour moulage par compression selon l'une quelconque des revendications 1 à 4, dans lequel le rétrécissement à la chaleur et à sec des fibres d'acide polylactique est inférieur ou égal à 5 %.

**6.** Textile non tissé pour moulage par compression selon l'une quelconque des revendications 1 à 5, dans lequel la résistance à la traction des fibres naturelles est supérieure ou égale à 1,0 cN/dtex.

7. Textile non tissé pour moulage par compression selon l'une quelconque des revendications 1 à 6, dans lequel les fibres naturelles sont des fibres de kenaf.

8. Procédé de production d'un produit moulé, le procédé comprenant le moulage par compression du textile non tissé pour moulage par compression selon l'une quelconque des revendications 1 à 7.

9. Procédé de production d'un produit moulé selon la revendication 8, dans lequel le moulage par compression est réalisé à l'aide d'un moule doté de moyens de refroidissement pendant un temps de moulage inférieur ou égal à 8 secondes.

10. Procédé de production d'un produit moulé selon la revendication 8 ou 9, dans lequel les fibres naturelles à mélanger sont des fibres de kenaf.

**Fig. 1**

(a)

(b)

(c)

**Fig. 2**

(a)

(b)

(c)

**Fig. 3**

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003260704 A
- US 6197414 B
- JP 2004130796 A
- US 2004096623 A
- JP 2005262559 A
- EP 1726418 A
- JP 2010126816 A
- EP 1726418 A1